(19) 

**Europäisches Patentamt**
**European Patent Office**
**Office européen des brevets**

(11) **EP 4 714 654 A1**

(12) **EUROPEAN PATENT APPLICATION**
published in accordance with Art. 153(4) EPC

(43) Date of publication:
**25.03.2026 Bulletin 2026/13**

(51) International Patent Classification (IPC):
**B32B 27/32** (2006.01)    **B32B 7/12** (2006.01)
**B65D 65/40** (2006.01)

(21) Application number: **24825669.5**

(52) Cooperative Patent Classification (CPC):
Y02W 30/80

(22) Date of filing: **28.05.2024**

(86) International application number:
**PCT/JP2024/019562**

(87) International publication number:
**WO 2024/262262 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.06.2023  JP 2023101580
24.05.2024  JP 2024084953
24.05.2024  JP 2024084959
24.05.2024  JP 2024084960
24.05.2024  JP 2024084969
24.05.2024  JP 2024084972
24.05.2024  JP 2024084976

(71) Applicant: **Toppan Holdings Inc.**
**Tokyo 110-0016 (JP)**

(72) Inventors:
• **FURUYA, Takeshi**
**Tokyo 110-0016 (JP)**
• **FUJII, Asako**
**Tokyo 110-0016 (JP)**

• **ONO, Ryusuke**
**Tokyo 110-0016 (JP)**
• **YAMAWAKI, Kentaro**
**Tokyo 110-0016 (JP)**
• **SHIOHARA, Mimori**
**Tokyo 110-0016 (JP)**
• **ARITA, Takeshi**
**Tokyo 110-0016 (JP)**
• **TAKAYANAGI, Kosuke**
**Tokyo 110-0016 (JP)**
• **TAMURA, Akira**
**Tokyo 110-0016 (JP)**
• **KUME, Makoto**
**Tokyo 110-0016 (JP)**
• **OSAWA, Kenta**
**Tokyo 110-0016 (JP)**

(74) Representative: **Wagner & Geyer**
**Partnerschaft mbB**
**Patent- und Rechtsanwälte**
**Gewürzmühlstrasse 5**
**80538 München (DE)**

(54) **SEALANT FILM, LAMINATE, PACKAGING MATERIAL, AND PACKAGING BAG**

(57)    A sealant film 1a includes: a recycled material-containing layer 2 containing a recycled material containing two or more kinds of resins; and a sealant layer 3 laminated on one main surface of the recycled material-containing layer 2, in which the arithmetic surface roughness of the surface $S_{3a}$ of the sealant layer 3 opposite to the recycled material-containing layer 2 is 0.5 μm to 5 μm.

**Fig.1**

EP 4 714 654 A1

## Description

### Technical Field

The present invention relates to a sealant film, a laminate, a packaging material, and a packaging bag.

### Background Art

In general, plastic films have properties such as being lightweight, chemically stable, easy to process, flexible yet strong, and capable of mass production, and therefore are used for various purposes. Examples of such applications include packaging materials for packaging food products, pharmaceuticals, or the like; infusion packs; shopping bags; posters; tape; optical films used in liquid crystal televisions; protective films; window films adhered on windows; vinyl greenhouses; and building materials, covering a wide range. Examples of specific materials include thermoplastic resins such as polyethylene, polypropylene, polystyrene, polymethyl methacrylate, polycarbonate, polyamide, polyethylene terephthalate, and polybutylene terephthalate, as well as thermosetting resins such as epoxy resin, polyurethane, and polyimide.

Depending on the application, an appropriate plastic material is selected, and plural types of such materials may be laminated to form a laminate. In addition, there is also a usage in which a plurality of plastic materials are mixed within a single layer to compensate for the disadvantages of a single material.

With recent efforts to address environmental issues, recycling of plastic products has become expected, and various recycling methods have been studied. For example, for PET bottles, techniques have been established for material recycling, in which collected products are washed, pulverized, and reused as raw materials, as well as for chemical recycling, in which products are converted into monomers.

In addition, as material recycling of polyethylene, the use of recycled polyethylene for applications such as films has been studied. For example, Patent Literature 1 proposes a sealant film containing recycled polyethylene resin.

### Citation List

### Patent Literature

[Patent Literature 1] PCT International Publication No. WO2022/124229

### Summary of Invention

### Technical Problem

Some recycled materials contain different types of resins. Accordingly, when the present inventors studied recycling of such recycled materials as raw materials for a sealant film, it became clear that, in a sealant film having a layer containing the recycled material, reliability during heat sealing may decrease.

On the other hand, film products such as sealant films are required to have a property that allows them to be molded and processed without occurrence of folding or wrinkles during the stages from film formation to winding (hereinafter also referred to as "film formability"). If the film formability of a film is insufficient, appearance defects due to folding or wrinkles are likely to occur in the film after winding.

An object of the present invention is to provide a sealant film which contains a recycled material containing two or more kinds of resins and has sufficient reliability during heat sealing and film formability, as well as a laminate, a packaging material, and a packaging bag.

### Solution to Problem

In order to solve the above problems, the present inventors have conducted studies on factors leading to a decrease in reliability during heat sealing, and have found that when different types of resins are mixed in a layer containing a recycled material, aggregates are formed by resin components other than the resin having the highest content ratio, and that when such aggregates cause excessive projections on the surface of the sealant film, air entrapment occurs during heat sealing. Based on such findings, the present inventors have conducted further studies, and as a result, they have found that a sealant film prepared so that the surface roughness of the sealant layer meets specific conditions can solve the above problems, thus leading to realization of the present invention.

One aspect of the present invention relates to [1] to [15] below.

[1] A sealant film including: a recycled material-containing layer containing a recycled material containing two or more kinds of resins; and a sealant layer laminated on one main surface of the recycled material-containing layer, in which the arithmetic surface roughness of the surface of the sealant layer opposite to the recycled material-containing layer is 0.5 μm to 5 μm.

[2] The sealant film according to [1], in which at least one of the recycled material-containing layer and the sealant layer contains a chemically recycled resin.

[3] The sealant film according to [1] or [2], in which the sealant film contains a polyethylene-based resin derived from biomass.

[4] The sealant film according to any one of [1] to [3], in which the sealant film is subjected to electron beam irradiation treatment.

[5] The sealant film according to any one of [1] to [4], in which the sealant film contains inorganic particles.

[6] The sealant film according to any one of [1] to [5], in which the thickness of the sealant layer is 5 μm to 70 μm.

[7] The sealant film according to any one of [1] to [6], in which the maximum height H of projections on the surface of the sealant layer is 0.5 μm to 10 μm, and the projections having the maximum height H have a ratio [W/H] of a width W at half the maximum height H to the maximum height H of 20 or less.

[8] The sealant film according to any one of [1] to [7], in which a resin having the highest content ratio among the two or more kinds of resins contained in the recycled material is a polyethylene-based resin or a polypropylene-based resin.

[9] The sealant film according to any one of [1] to [8], further including: an auxiliary layer laminated on the other main surface of the recycled material-containing layer.

[10] The sealant film according to [9], in which the auxiliary layer contains a virgin resin of the same type as the resin having the highest content ratio in the recycled material-containing layer.

[11] A laminate including: the sealant film according to any one of [1] to [10]; and a gas barrier layer provided on the surface of the sealant film opposite to the sealant layer.

[12] A laminate further including, in this order: the sealant film according to any one of [1] to [10]; an adhesive layer; and a base material film.

[13] A packaging material including: the sealant film according to any one of [1] to [10].

[14] The packaging material according to [13], in which the content of plastic material contained in the recycled material is 10 mass% or more based on the total amount of plastic material in the packaging material.

[15] A packaging bag produced from the packaging material according to [13] or [14].

## Advantageous Effects of Invention

According to the present invention, it is possible to provide a sealant film which contains a recycled material containing two or more kinds of resins and has sufficient reliability during heat sealing and film formability, as well as a laminate, a packaging material, and a packaging bag.

## Brief Description of Drawings

FIG. 1 is a schematic cross-sectional view showing one embodiment of a sealant film according to the present invention.

FIG. 2 is a schematic diagram for explaining an aspect ratio of a low transmittance lightness region.

FIG. 3 is a schematic cross-sectional view showing another embodiment of the sealant film according to the present invention.

FIG. 4 is a schematic cross-sectional view showing one embodiment of a laminate according to the present invention.

FIG. 5 is a schematic cross-sectional view showing another embodiment of the laminate according to the present invention.

FIG. 6 is a schematic cross-sectional view showing another embodiment of the laminate according to the present invention.

FIG. 7 is a schematic cross-sectional view showing another embodiment of the laminate according to the present invention.

FIG. 8 is a schematic cross-sectional view showing one embodiment of a packaging material according to the present invention.

FIG. 9 is a schematic cross-sectional view showing another embodiment of the packaging material according to the present invention.

FIG. 10 is a schematic cross-sectional view showing another embodiment of the packaging material according to the present invention.

## Description of Embodiments

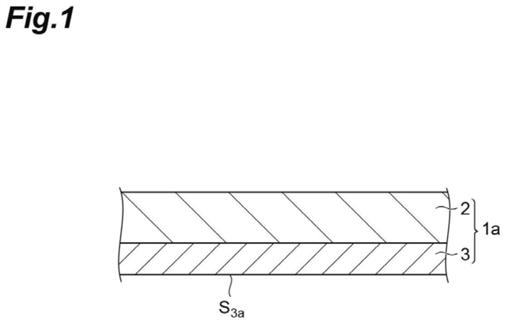

Hereinafter, embodiments of the present invention will be described in detail. FIGS. 1 to 10 are schematically shown views, and the sizes, shapes, or the like of the respective parts are exaggerated as appropriate to facilitate understanding. In addition, the embodiments described below illustrate configurations for embodying the technical concept of the present invention, and the technical concept of the present invention is not limited to the materials, shapes, structures, and the like of the components described below. The technical concept of the present invention can be modified in various ways within the technical scope defined by the claims set forth in the patent claims.

<Sealant film>

A sealant film of the present embodiment includes: a recycled material-containing layer containing a recycled material containing two or more kinds of resins; and a sealant layer laminated on one main surface of the recycled material-containing layer.

FIG. 1 is a schematic cross-sectional view showing one embodiment of a sealant film. A sealant film 1a shown in FIG. 1 includes a recycled material-containing layer 2 and a sealant layer 3 laminated on one main surface of the recycled material-containing layer 2.

In the sealant film of the present embodiment, at least one of the recycled material-containing layer and the sealant layer may contain a chemically recycled resin.

Meanwhile, with the growing awareness of preventing global warming and reducing the use of petroleum, which is an exhaustible resource, replacement of conventional petroleum-derived plastic materials with carbon-neutral plant-derived plastic materials has been studied. When the mass ratio of plant-derived plastic in a product meets the criterion of being 10% or more, it is certified with a Biomass Mark by the Japan Organics Recycling Association. Furthermore, when the criterion of being 25% or more is met, it is certified with a BiomassPla Mark by the Japan BioPlastics Association. From the viewpoint of increasing a biomass degree in plastic-containing products such as packaging materials, there is demand for the sealant film to contain plant-derived plastic.

The sealant film of the present embodiment may contain a polyethylene-based resin derived from biomass. Such a sealant film contains a recycled material containing two or more kinds of resins, has sufficient reliability during heat sealing and film formability, and further can increase the biomass degree of a plastic-containing product.

In addition, there is also demand for imparting properties other than sealability to the sealant film. For example, by blending inorganic particles into a resin film, it can be expected to impart functions such as concealability, and such a sealant film can contribute to diversification of packaging materials.

The sealant film of the present embodiment may contain inorganic particles, the recycled material-containing layer may contain inorganic particles, and the sealant film may further include an auxiliary layer containing inorganic particles. Such a sealant film contains a recycled material containing two or more kinds of resins, has sufficient reliability during heat sealing and film formability, and can also impart functions by inorganic particles.

(Recycled material-containing layer)

Examples of the recycled material contained in the recycled material-containing layer include bottles and packaging bags for beverages, detergents, and seasonings, food containers such as lunch boxes and cup noodles, packaging bags for food and garbage, plastic products such as hangers, stationery, daily necessities, home appliances, and toys, which are collected from the market and referred to as post-consumer recycled (PCR) materials, as well as defective products that do not become products, scrap generated in the process of manufacturing products, and plastic products used for transportation or packaging, which are discharged from factories and referred to as post-industrial recycled (PIR) materials.

When the recycled material is a material-recycled material, the material-recycled material may be washed and pulverized as necessary. Compared with a resin obtained by chemical recycling, in which the resin is chemically recycled by pyrolysis or the like, the material-recycled material has an advantage of requiring less energy during recycling. Therefore, the larger the proportion of the material-recycled material in the recycled material-containing layer, the smaller the environmental load can be made.

In the sealant film of the present embodiment, from the viewpoint of material recycling of plastic films, a laminate (packaging material) obtained by bonding a plurality of kinds of resin sheets, a packaging bag produced from the laminate, a laminate (packaging material) obtained by bonding resin sheets of the same type, a packaging bag produced from the laminate, or a mixture thereof may be used. Examples of packaging bags include refill pouches for toiletries.

The recycled material contained in the recycled material-containing layer contains two or more kinds of resins. Examples of the two or more kinds of resins include thermoplastic resins, thermosetting resins, and cured products thereof (including crosslinked products). The two or more kinds of resins also include, for example, resin components constituting an adhesive (for example, a thermosetting resin) and cured products thereof.

Examples of thermoplastic resins include polyolefin resins, acrylic resins, polycarbonate resins, polyester resins, and polyamide resins. Examples of thermosetting resins include epoxy resins, polyurethane resins, and polyimide resins.

Examples of polyolefin resins include: polyethylene-based resins such as low-density polyethylene (LDPE), linear low-density polyethylene (LLDPE), medium-density polyethylene (MDPE), high-density polyethylene (HDPE), and ethylene-$\alpha$-olefin copolymers; and polypropylene-based resins such as homopolypropylene (PP), block polypropylene, random polypropylene, and propylene-$\alpha$-olefin copolymers.

Examples of polyester resins include polyethylene terephthalate, polybutylene terephthalate, and polylactic acid.

Examples of polyamide resins include nylon 6.

The two or more kinds of resins may include a first resin having the highest content ratio in the recycled material and a second resin that is incompatible with the first resin or can form aggregates in the first resin. The type of resin contained in the recycled material-containing layer can be identified by a microscopic infrared spectrophotometer or the like.

The first resin and the second resin may be in the following combinations:

(a) a thermoplastic resin, a thermosetting resin, and a cured product thereof;
(b) a hydrocarbon-based resin and a heteroatom-containing resin; and
(c) a resin soluble in a predetermined solvent and a resin insoluble in the predetermined solvent.

Examples of hydrocarbon-based resins in (b) include polyolefin-based resins and polystyrene-based resins, and examples of heteroatom-containing resins include acrylic resins, polyester resins, and polyamide resins.

Examples of predetermined solvents in (c) include aromatic hydrocarbons and chlorinated hydrocarbons. Examples of resins soluble in a predetermined solvent include uncrosslinked resins. Examples of resins insoluble in a predetermined solvent include crosslinked resins and cured thermosetting resins.

As the first resin having the highest content ratio in the recycled material, from the viewpoint of recycling packaging bags such as pouch products, a polyethylene-based resin or a polypropylene-based resin may be used. In this case, as the second resin, for example, at least one selected from polyester resins, polyamide resins, and resin components constituting an adhesive and cured products thereof may be used.

The content of the first resin in the recycled material-containing layer may be 75 to 98 mass%, 75 to 95 mass%, or 80 to 90 mass% based on a total mass of the recycled material-containing layer.

The content of the second resin in the recycled material-containing layer may be 2 to 33 parts by mass, 5 to 33 parts by mass, or 11 to 25 parts by mass based on 100 parts by mass of the first resin.

The content of the recycled material in the recycled material-containing layer may be 13 mass% or more, 33 mass% or more, 50 mass% or more, or 100 mass% based on the total mass of the recycled material-containing layer.

The resin having the highest content ratio in the recycled material-containing layer may be the same as the resin having the highest content ratio in the recycled material. Such a resin may be, for example, at least one polyethylene-based resin selected from the group consisting of low-density polyethylene (LDPE), linear low-density polyethylene (LLDPE), medium-density polyethylene (MDPE), and high-density polyethylene (HDPE).

The recycled material-containing layer may further contain a virgin material such as a virgin resin. The virgin material may be blended in so that the resin having the highest content ratio in the recycled material is the same as the resin having the highest content ratio in the recycled material-containing layer. As the virgin material, for example, the same polyolefin resins as those described above can be used, and at least one polyethylene-based resin selected from the group consisting of low-density polyethylene (LDPE), linear low-density polyethylene (LLDPE), medium-density polyethylene (MDPE), and high-density polyethylene (HDPE) may be used.

The virgin resin may be a petroleum-derived resin or a biomass-derived resin, but from the viewpoint of increasing a biomass degree, a biomass-derived resin is preferable.

The recycled material-containing layer may contain a polyethylene-based resin derived from biomass. By incorporating a polyethylene-based resin derived from biomass in the recycled material-containing layer, both recyclability and a high biomass degree can be achieved, and the environmental load can be further reduced.

Examples of the polyethylene-based resin derived from biomass include a homopolymer of plant-derived ethylene derived from bioethanol obtained from plant raw materials, and a copolymer of plant-derived ethylene and another monomer.

Plant-derived ethylene can be obtained by producing bioethanol through fermentation of a sugar solution or starch obtained from plants such as sugarcane, corn, and sweet potatoes using microorganisms such as yeast, and heating the bioethanol in the presence of a catalyst.

Plant-derived ethylene may be obtained by producing bioethanol through fermentation, using microorganisms such as yeast, of a sugar solution or starch obtained from inedible plants such as rice straw, sorghum, thinned wood, waste mushroom beds, and coffee grounds, and heating the bioethanol in the presence of a catalyst. Using inedible plants as raw materials, competition with food resources can be avoided, thereby providing a more sustainable and environmentally friendly film.

In addition, the polyethylene-based resin derived from biomass may be one that is commercially available (for example, Green PE available from Braskem S.A.).

In addition, polyethylene-based resins having different densities and degrees of branching as described above can be obtained by appropriately selecting a polymerization method. For example, using a multi-site catalyst such as a Ziegler-Natta catalyst, or a single-site catalyst such as a metallocene catalyst, as a polymerization catalyst, it is preferable to perform polymerization in one stage or in multiple stages of two or more by any of gas-phase polymerization, slurry polymerization, solution polymerization, or high-pressure ionic polymerization.

The single-site catalyst described above is a catalyst capable of forming uniform active species, and is usually prepared by bringing a metallocene transition metal compound or a non-metallocene transition metal compound into contact with a cocatalyst for activation. The single-site catalyst is preferable because, compared with a multi-site catalyst, it has a uniform structure of active sites, and therefore can polymerize polymers having high molecular weight and high uniformity. As the single-site catalyst, it is particularly preferable to use a metallocene catalyst. The metallocene catalyst is a catalyst that includes a transition metal compound of Group IV of the periodic table containing a ligand with a cyclopentadienyl skeleton, a cocatalyst, an organometallic compound if necessary, and a carrier, each being a catalyst component.

In the above-described transition metal compound of Group IV of the periodic table containing a ligand with a cyclopentadienyl skeleton, the cyclopentadienyl skeleton is a cyclopentadienyl group or a substituted cyclopentadienyl group. The substituted cyclopentadienyl group has at least one substituent selected from hydrocarbon groups having 1 to 30 carbon atoms, silyl groups, silyl-substituted alkyl groups, silyl-substituted aryl groups, cyano groups, cyanoalkyl groups, cyanoaryl groups, halogen groups, haloalkyl groups, halosilyl groups, and the like. The substituted cyclopentadienyl group may have two or more substituents, and the substituents may be bonded to each other to form a ring, such as an indenyl ring, a fluorenyl ring, an azulenyl ring, or a hydrogenated product thereof. The rings formed by bonding of the substituents to each other may further have substituents.

In the transition metal compound of Group IV of the periodic table containing a ligand with a cyclopentadienyl skeleton, examples of the transition metal include zirconium, titanium, and hafnium, with zirconium and hafnium being particularly preferable. The transition metal compound usually has two ligands with a cyclopentadienyl skeleton, and the ligands with a cyclopentadienyl skeleton are preferably bonded to each other by a bridging group. Examples of the bridging group include alkylene groups having 1 to 4 carbon atoms, substituted silylene groups such as silylene groups, dialkylsilylene groups and diarylsilylene groups, substituted germylene groups such as dialkylgermylene groups and diarylgermylene groups, with substituted silylene groups being preferable. The above-described transition metal compound of Group IV of the periodic table containing a ligand with a cyclopentadienyl skeleton can be used as a catalyst component, either alone or as a mixture of two or more kinds.

The cocatalyst refers to a substance that enables the above-described transition metal compound of Group IV of the periodic table to function effectively as a polymerization catalyst or that can balance an ionic charge in a catalytically activated state. Examples of the cocatalyst include: benzene-soluble aluminoxanes of organoaluminum oxy compounds; benzene-insoluble organoaluminum oxy compounds; ion-exchangeable layered silicates; boron compounds; ionic compounds composed of cations with or without active hydrogen groups and non-coordinating anions; lanthanoid salts such as lanthanum oxide; tin oxide; and phenoxy compounds containing fluoro groups.

The transition metal compound of Group IV of the periodic table containing a ligand with a cyclopentadienyl skeleton may be supported on an inorganic or organic carrier compound for use. The carrier is preferably a porous oxide of an inorganic or organic compound, and specific examples thereof include ion-exchangeable layered silicates such as montmorillonite, $SiO_2$, $Al_2O_3$, $MgO$, $ZrO_2$, $TiO_2$, $B_2O_3$, $CaO$, $ZnO$, $BaO$, and $ThO_2$, or mixtures thereof. Furthermore, examples of the organometallic compound that may be used as necessary include organoaluminum compounds, organomagnesium compounds, and organozinc compounds. Of these, organoaluminum is suitably used.

When the recycled material-containing layer contains a biomass-derived resin, it becomes easy to reduce Ra, H, and the ratio [W/H] in the sealant layer described below.

The recycled material-containing layer may contain a chemically recycled resin. In the present specification, the chemically recycled resin refers to a resin obtained by chemical recycling, meaning a resin produced by polymerizing a discarded resin after converting it into low-molecular weight compounds through a process such as gasification or monomerization. Since the chemically recycled resin is produced as a new material from raw materials obtained by chemically decomposing waste, the amount of foreign matter can be reduced.

The chemically recycled resin can be used without particular limitation as long as it is a resin produced by a chemical recycling method. Examples of the chemical recycling method include a depolymerization method, a pyrolysis method, a gasification method, a coke oven chemical feedstock method, and a blast furnace reducing agent method, and polymerization or repolymerization methods are not particularly limited, and known methods can be used.

The chemically recycled resin may be a polyolefin resin such as chemically recycled polyethylene or chemically recycled polypropylene. Such a polyolefin resin can be produced, for example, by subjecting mixed waste plastics containing a polyolefin resin to pyrolysis under oxygen-free conditions, cracking the resulting pyrolysis oil (such as naphtha) to produce ethylene and propylene, and polymerizing them.

When the recycled material-containing layer contains a chemically recycled resin, it becomes easy to reduce Ra, H, and the ratio [W/H] in the sealant layer described below.

When the recycled material-containing layer contains inorganic particles, the inorganic particles can be appropriately selected depending on the function to be imparted. Examples of the functions to be imparted include concealability and moisture absorbability. The inorganic particles may be used alone or in combination of two or more thereof.

When imparting concealability to the recycled material-containing layer, white inorganic particles can be used as the inorganic particles, and from the viewpoint of interfacial adhesion between the particle surface and the resin, examples include titanium oxide, zinc oxide, lithopone, calcium carbonate, barium sulfate, and aluminum hydroxide. Among these, titanium oxide is preferable because it has no specific absorption in the visible region and has a high refractive index.

An average particle diameter of the inorganic particles may be 0.10 to 0.50 $\mu$m, 0.15 to 0.40 $\mu$m, or 0.20 to 0.30 $\mu$m, from the viewpoint of dispersibility in the recycled material-containing layer. The average particle diameter of the inorganic particles refers to a value measured by a laser diffraction/scattering method.

The content of the inorganic particles may be 0.10 to 30.00 mass% based on the total mass of the recycled material-containing layer. When imparting concealability to the recycled material-containing layer, the content of the inorganic particles may be 1.00 mass% or more, 5.00 mass% or more, 7.00 mass% or more, or 10.00 mass% or more, based on the total mass of the recycled material-containing layer, from the viewpoint of superior concealability. Further, the content of the inorganic particles may be 23.00 mass% or less, 20.00 mass% or less, 15.00 mass% or less, 12.00 mass% or less, or 8.00 mass% or less, from the viewpoint of suppressing a decrease in cold impact resistance of the sealant film.

The inorganic particles are preferably dispersed in the recycled material-containing layer. When the recycled material contains a resin having a polar group such as a hydroxyl group, an ester group, or an amide group, dispersibility between the inorganic particles and the recycled material in the recycled material-containing layer can be improved.

When imparting concealability to the sealant film, inorganic particles may be contained in the recycled material-containing layer and/or an auxiliary layer described below so that the transmission density of the sealant film becomes 0.20 or more, 0.40 or more, or 0.50 or more. The transmission density can be measured using a portable transmission densitometer (model No. 341C) manufactured by X-Rite Inc.

The recycled material-containing layer may contain aggregates derived from, for example, the above-described second resin. From the viewpoint of ensuring reliability during heat sealing, the aggregates may have a maximum diameter of 20 $\mu$m or less. When the aggregates have a maximum diameter of 20 $\mu$m or less, it becomes easy to suppress occurrence of projections having a height exceeding 10 $\mu$m, or projections having a height of 0.5 $\mu$m to 10 $\mu$m and a ratio of the width at half the height to the height of more than 20, on the surface of the sealant layer.

The recycled material-containing layer may contain aggregates having a maximum diameter of 40 $\mu$m to 100 $\mu$m, 50 $\mu$m to 90 $\mu$m, or 60 $\mu$m to 80 $\mu$m.

The aggregates and their maximum diameters can be identified by the following method.

Aggregates contained in the recycled material-containing layer can be identified as domains in which the transmission lightness is lower than that of the surroundings (hereinafter also referred to as "low transmittance lightness regions") when the sealant film is observed in transmission from a plan view direction, and the maximum diameter of the low transmittance lightness region can be obtained by the following procedure.

(i) Using a stereomicroscope system SZX16 (manufactured by Olympus Corporation, product name), ten observation images (image size: 243 $\mu$m $\times$ 851 $\mu$m) of the sealant film in the planar direction are randomly obtained.
(ii) The obtained ten images are subjected to image analysis using WinROOF 2021 (manufactured by Mitani Corporation, product name). **In** the image analysis, the maximum diameter of each low transmittance lightness region is calculated by binarizing the low transmittance lightness region and the surrounding high transmittance lightness region. **In** the binarization, the visually observed shape of the low transmittance lightness region and the colored range can be matched by appropriately combining the following operations.

(a) Emphasizing the low transmittance lightness region by brightness and contrast adjustment.
(b) Adjusting a threshold to match the visually observed low transmittance lightness region with the colored range.
(c) When there are areas where adjacent low transmittance lightness regions are recognized as a single region, or when there are areas where a perforated low transmittance lightness region is recognized as a plurality of regions, division or integration processing may be performed as necessary.

**In** order to reduce the maximum diameter of the aggregates in the recycled material-containing layer, for example, the following adjustment means can be exemplified.

(i) Reducing the content of the recycled material in the recycled material-containing layer.
(ii) Increasing the content of the above first resin in the recycled material.
(iii) **In** extrusion molding of the recycled material-containing layer, increasing a screw rotation speed.
(iv) **In** extrusion molding of the recycled material-containing layer, avoiding narrowing of a flow channel as much as possible and adopting a mechanism in which tensile stress is less likely to be applied; and
(v) Using the recycled material in a form of a master batch by repelletizing it or mixing it with a virgin resin using a twin-screw extruder.

The thickness of the recycled material-containing layer may be 20 to 100 $\mu$m.

(Sealant layer)

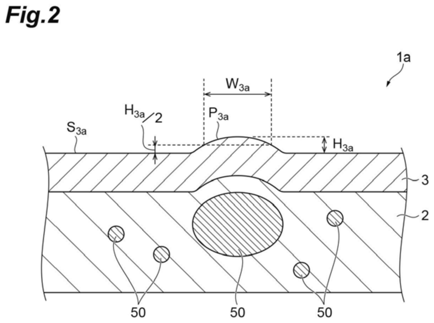

The sealant layer has a concavo-convex shape on a surface opposite to the recycled material-containing layer, and the arithmetic surface roughness Ra of the surface (for example, $S_{3a}$ shown in FIG. 1) defined in JIS B 0601:2001 is 0.5 $\mu$m to 5 $\mu$m. When Ra is 5 $\mu$m or less, it is possible to suppress a decrease in reliability due to air entrapment (for example, deterioration in low-temperature heat sealability) when heat sealing is performed by overlapping sealant films. In addition, the thickness of the concave portions becomes locally thin, making it less likely for problems such as a deterioration in impact resistance and puncture resistance to occur. On the other hand, when Ra is 0.5 $\mu$m or more, a coefficient of friction does not become excessively large, and appropriate slipperiness can be obtained, making wrinkles less likely to occur during film formation.
From the above viewpoint, the above Ra may be 0.5 $\mu$m to 4 $\mu$m, 0.5 $\mu$m to 3 $\mu$m, 0.5 $\mu$m to 2 $\mu$m, 0.5 $\mu$m to 1.5 $\mu$m, 1.0 $\mu$m to 4 $\mu$m, 1.0 $\mu$m to 3 $\mu$m, or 1.0 $\mu$m to 2 $\mu$m.
Examples of methods for adjusting the above Ra include, in addition to the above-described method for adjusting the maximum diameter of the aggregates, changing the thickness of the sealant layer, blending an anti-blocking agent into the sealant layer, and forming a predetermined concavo-convex shape on the surface of the sealant layer (for example, pressing a nip roll when cooling and solidifying a molten resin during film formation).
From the viewpoint of ensuring reliability during heat sealing, a projection ($P_{3a}$ shown in FIG. 2) on the above surface ($S_{3a}$ shown in FIG. 2) of the sealant layer may have a height ($H_{3a}$ shown in FIG. 2 of 10 $\mu$m or less, 0.5 to 9 $\mu$m, or 0.5 to 8 $\mu$m. From the same viewpoint, the width ($W_{3a}$ shown in FIG. 2) at half the height of the projection may be 200 $\mu$m or less, 1 to 150 $\mu$m, or 1 to 100 $\mu$m. FIG. 2 is a schematic cross-sectional view for explaining the shape of the projection in the sealant film shown in FIG. 1. As shown in FIG. 2, the projection $P_{3a}$ may be caused by the surface $S_{3a}$ of the sealant layer 3 being raised due to aggregates 50 generated in the recycled material-containing layer.
The projections on the above surface of the sealant layer may have a maximum height H of 0.5 $\mu$m to 10 $\mu$m, and the projections having the maximum height H may have a ratio [W/H] of a width W at half the maximum height H to the maximum height H of 20 or less. The above H may be 0.5 to 9 $\mu$m and the ratio [W/H] may be 1 to 18. In this case, advantages can be obtained in terms of (i) increasing the content of the recycled material in the recycled material-containing layer, (ii) increasing the content of the recycled material in the sealant film by thinning the sealant layer, and (iii) improving productivity by reducing pressure applied during cooling or heat pressing during film formation.
As a material for forming the sealant layer, a material having appropriate flexibility, such as a thermoplastic resin, and having favorable processability, for example, suitability for processing by an extruder, can be used. Examples of such materials include: low-density polyethylene (LDPE), linear low-density polyethylene (LLDPE), medium-density polyethylene (MDPE), high-density polyethylene (HDPE), polypropylene including homopolymers, random copolymers, and block copolymers, ethylene-vinyl acetate copolymer obtained by copolymerizing an olefin such as low-density polyethylene (LDPE) with vinyl acetate, ethylene-methyl acrylate copolymer (EMA) obtained by modifying side chains of olefins, ethylene-ethyl acrylate copolymer (EEA), ethylene-butyl acrylate copolymer (EBA), and ethylene-methacrylic acid copolymer (EMAA). These may be used alone or in combination of two or more thereof.
The resin forming the sealant layer may be a chemically recycled resin. The chemically recycled resins can be those described above.
The content of the chemically recycled resin in the sealant layer is preferably 40 mass% or more, more preferably 70 mass% or more, still more preferably 90 mass% or more, and particularly preferably 100 mass% based on the total mass of the sealant layer, from the viewpoint of reducing environmental load.
The resin forming the sealant layer may contain a polyethylene-based resin derived from biomass. The polyethylene-based resins derived from biomass can be those described above.
The biomass degree of the polyethylene-based resin derived from biomass in the sealant layer is preferably 50% to 100%, more preferably 70% to 100%. **In** this way, the biomass degree in the sealant film can be increased, and the environmental load can be further reduced. The biomass degree refers to the dry weight proportion of the biomass raw material used.

From the viewpoint of heat sealability, the sealant layer may contain a resin of the same type as the resin having the highest content ratio in the recycled material-containing layer, and a virgin resin and/or a chemically recycled resin may be blended in so as to achieve this. For example, when the resin having the highest content ratio in the recycled material-containing layer is a polyethylene-based resin, the sealant layer may contain a polyethylene-based resin, and the polyethylene-based resin may be a main component (for example, the content in the sealant layer may be 95 mass% or more). In this case, at least one of the recycled material-containing layer and the sealant layer or at least one of the recycled material-containing layer, the sealant layer, and an auxiliary layer described below may contain a polyethylene-based resin derived from biomass. In addition, when the resin having the highest content ratio in the recycled material-containing layer is a polypropylene-based resin, the sealant layer may contain a polypropylene-based resin, and the polypropylene-based resin may be a main component (for example, the content in the sealant layer may be 95 mass% or more).

From the viewpoint of reducing the above maximum height H and the ratio [W/H], the sealant layer may contain a polypropylene-based resin.

From the viewpoint of processability in film formation, the MFR of the polyethylene-based resin may be 0.05 to 15 g/10 min or 0.1 to 8 g/10 min. The MFR herein refers to a value measured in accordance with JIS K 7210 (190°C, load: 2.16 kg).

From the viewpoint of processability in film formation, the MFR of the polypropylene-based resin may be 0.05 to 20 g/10 min or 0.1 to 10 g/10 min. The MFR herein refers to a value measured in accordance with JIS K 7210 (230°C, load: 2.16 kg).

From the viewpoints of heat sealability and rigidity, the crystallinity of the polypropylene-based resin determined by heat of fusion obtained using a differential scanning calorimeter (DSC) may be 25% to 60% or 30% to 55%.

In the present specification, the crystallinity of the polypropylene-based resin which is a sample is determined from the ratio of the heat of fusion $\Delta Hm$ obtained by integration of the endothermic peak during melting of a sample to the heat of fusion $\Delta H100$ of a completely crystalline material having 100% crystallinity obtained by theoretical calculation, as shown in the following equation.

$$\text{Crystallinity } [\%] = (\Delta Hm \, / \, \Delta H100) \times 100$$

The heat of fusion $\Delta H100$ of the completely crystalline material may be a value described in the following literature. For example, the $\Delta H100$ of polypropylene may be 207 J/g.

Reference literature: The Japan Society of Polymer Processing, Plastic Materials in Polymer Processing, 335 (2011), Morikita Publishing Co., Ltd.

The sealant layer may contain the above resins as a virgin material. **In** addition, from the viewpoint of stability of heat sealing performance, the sealant layer may be one that does not contain a recycled material.

The thickness of the sealant layer may be 5 $\mu$m to 70 $\mu$m. In this case, it becomes easy to prevent aggregates contained in the recycled material-containing layer from being exposed from the sealant layer, as well as to secure the rigidity of the entire sealant film and to increase the content of the recycled material in the sealant film. Thus, in the sealant film, material recycling of a recycled material containing two or more kinds of resins can be more effectively realized. The thickness of the sealant layer may be 5 $\mu$m to 60 $\mu$m, 5 $\mu$m to 55 $\mu$m, 5 $\mu$m to 50 $\mu$m, 5 $\mu$m to 40 $\mu$m, 5 $\mu$m to 30 $\mu$m, 5 $\mu$m to 20 $\mu$m, 10 $\mu$m to 65 $\mu$m, 10 $\mu$m to 60 $\mu$m, 10 $\mu$m to 55 $\mu$m, 10 $\mu$m to 50 $\mu$m, 10 $\mu$m to 40 $\mu$m, 10 $\mu$m to 30 $\mu$m, 15 $\mu$m to 60 $\mu$m, or 20 $\mu$m to 60 $\mu$m.

The recycled material-containing layer and the sealant layer may contain, as necessary, additives such as compatibilizers, nucleating agents, reinforcing fillers, antioxidants, heat stabilizers, weathering agents, light stabilizers, plasticizers, ultraviolet absorbers, antistatic agents, flame retardants, flame retardant auxiliaries, slip agents, anti-blocking agents, anti-fogging agents, lubricants, pigments, dyes, dispersants, copper damage inhibitors, neutralizers, anti-foaming agents, weld strength improvers, natural oils, synthetic oils, and waxes. The additives may be used alone or in combination of two or more thereof.

Examples of the nucleating agents and reinforcing fillers include talc, silica, clay, montmorillonite, calcium carbonate, lithium carbonate alumina, titanium oxide, metals such as aluminum, iron, silver, and copper, hydroxides such as aluminum hydroxide and magnesium hydroxide, celluloses such as cellulose microfibrils and cellulose acetate, fibrous fillers such as glass fibers, polyethylene terephthalate fibers, nylon fibers, polyethylene naphthalate fibers, aramid fibers, vinylon fibers, and polyacrylate fibers, carbons such as carbon nanotubes, and elastomers such as ethylene propylene rubber (EPR).

Examples of the antioxidants include phenolic compounds, organic phosphite compounds, and thioether compounds.

Examples of the heat stabilizers and the light stabilizers include hindered amine compounds.

Examples of the ultraviolet absorbers include benzophenone compounds, benzotriazole compounds, and benzoate compounds.

Examples of the antistatic agents include nonionic compounds, cationic compounds, and anionic compounds.

Examples of the flame retardants include halogen compounds, phosphorus compounds, nitrogen compounds, inorganic compounds, boron compounds, silicone compounds, sulfur compounds, and red phosphorus compounds.

Examples of the flame retardant auxiliaries include antimony compounds, zinc compounds, bismuth compounds, magnesium hydroxide, and clay silicates.

Examples of the anti-blocking agents include acrylic particles, styrene particles, styrene-acrylic particles and crosslinked products thereof, polyurethane particles, polyester particles, silicon particles, fluorine particles, copolymers thereof, clay compound particles such as zeolite, pyrophyllite, talc, smectite, vermiculite, mica, chlorite rock, kaolin minerals, and sepiolite, silica, titanium oxide, alumina, silica-alumina, zirconia, zinc oxide, strontium oxide, aluminum hydroxide, strontium carbonate, strontium chloride, strontium sulfate, strontium nitrate, strontium hydroxide, and glass particles.

In the sealant film of the present embodiment, the ratio Tr/Ts of the thickness Tr of the recycled material-containing layer to the thickness Ts of the sealant layer may be 0.3 to 16, 0.5 to 14, or 0.7 to 12.

The sealant film of the present embodiment is subjected to electron beam irradiation treatment. As a result, the crosslinking density of the resin contained in the sealant film is increased by the electron beam irradiation, and the mechanical strength of the sealant film can be further improved.

A packaging bag such as a pouch is usually produced by bag-making of a packaging material including a sealant film. However, when pinholes are formed in the packaging material constituting the packaging bag due to abrasion during transportation, there is a concern that external air or components of a base material layer may enter the packaging bag, thereby affecting the hygiene of the contents. In addition, when filling with contents having sharp-angled portions, there is a concern that pinholes may be formed from the inside to the outside of the packaging bag. Therefore, it is desirable that the sealant film used as the packaging material has excellent puncture strength. When the sealant film of the present embodiment is subjected to electron beam irradiation treatment, the sealant film can contain a recycled material containing two or more kinds of resins, and can have sufficient reliability during heat sealing, puncture strength, and film formability.

The electron beam irradiation treatment may be performed from the side opposite to the side where the sealant layer of the sealant film is provided (in a case of a packaging material including the sealant film, from the side opposite to the surface in contact with contents or fillers).

In addition, the sealant film of the present embodiment may be subjected to electron beam irradiation treatment when or after forming a laminate or a packaging material described below. For example, an ink layer or an overcoat layer that is cured by electron beam irradiation may be provided on the sealant film, and the irradiation conditions of the electron beam may be set such that the sealant film is irradiated with a predetermined dose of electron beam when curing these layers. In particular, in the case of multicolor printing, further improvement in strength can be expected because EB irradiation for each color is accumulated. In addition, in the case of a packaging material in which the sealant film is laminated with a gas barrier layer, a base material film, or the like, the irradiation conditions of the electron beam may be set such that the sealant film is irradiated with a predetermined dose of electron beam in EB sterilization performed after pouching or after filling with contents. From the viewpoint of improving puncture strength and the like, preferably, the acceleration voltage and irradiation energy of the electron beam may be adjusted so that the dose of the electron beam in the sealant film is preferably 10 KGy to 2000 KGy, or 20 KGy to 500 KGy. From the same viewpoint, the dose of the electron beam and the acceleration voltage and irradiation energy of the electron beam may be adjusted so that the gel fraction of the sealant film falls within the range described below.

In the sealant film of the present embodiment, the gel fraction calculated by the following method may be 0.5% to 85% or 20% to 80%. The gel fraction can serve as an index of crosslinking density. When the gel fraction is within the above range, it becomes easy to achieve both improvement in mechanical strength of the sealant film due to an increase in crosslinking density of the recycled material-containing layer and ensuring of heat sealability due to prevention of excessive crosslinking of the sealant layer.

(Method for calculating gel fraction)

The gel fraction is a calculation method in which the fact that crosslinked portions are insoluble in a solvent is utilized. Specifically, a sealant film is immersed in an organic solvent such as xylene, and after drying the insoluble film remaining without being dissolved, the mass is measured, and the gel fraction can be calculated from the mass of the sealant film before dissolution and the mass of the insoluble film after drying. Specifically, the gel fraction can be calculated by the following procedure.

(i) First, X g of a sealant film is wrapped with Y g of a stainless steel mesh, and heated and immersed in a solvent. The heating temperature and immersion time are 120°C and 8 hours, respectively.

(ii) Next, the sealant film wrapped with the stainless steel mesh is taken out from the solvent and vacuum-dried. The drying temperature and drying time are 60°C and 3 hours, respectively.

(iii) The mass (Z g) of the sealant film wrapped with the stainless steel mesh after drying is measured, and the gel fraction is calculated by the following Equation (1).

$$\text{Gel fraction (mass\%)} = [(Z - Y) / X] \times 100 \quad \dots(1)$$

Even when the EB irradiation dose is low, there are cases where the physical strength is improved by EB irradiation, and it is presumed that crosslinking occurs even if the gel fraction shows only a slight increase. In such cases, in differential scanning calorimetry (DSC) analysis, a shift of the melting peak intensity to a lower temperature and a phenomenon in melting enthalpy are observed.

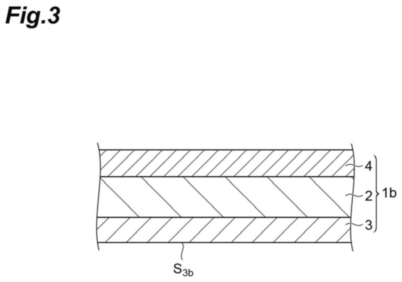

The sealant film of the present embodiment may have a multilayer structure in which desired physical properties are complemented by further laminating another layer. FIG. 3 is a schematic cross-sectional view showing another embodiment of the sealant film. A sealant film 1b shown in FIG. 3 includes a recycled material-containing layer 2, a sealant layer 3 laminated on one main surface of the recycled material-containing layer 2, and an auxiliary layer 4 laminated on the other main surface of the recycled material-containing layer 2. In this case as well, the arithmetic surface roughness Ra of the surface $S_{3b}$ of the sealant layer 3 opposite to the recycled material-containing layer 2, as defined in JIS B 0601:2001, can satisfy the above-described conditions.

In order to further increase the rigidity of the sealant film 1b, the auxiliary layer 4 may be configured to contain a resin having a high density. In order to suppress curling due to heat shrinkage of the sealant film 1b, the auxiliary layer 4 may be configured to contain a resin having a density approximately equal to that of the resin constituting the sealant layer 3 (for example, a density difference of 0.1 kg/m$^3$ or less).

In addition, when the auxiliary layer 4 is given a function as a laminate layer, it may have a configuration similar to that of the sealant layer 3 described above. From the viewpoint of reducing environmental load, the auxiliary layer 4 may contain a chemically recycled resin. From the viewpoint of increasing the biomass degree, the auxiliary layer 4 may contain a polyethylene-based resin derived from biomass. In addition, the auxiliary layer 4 may contain a resin of the same type as the resin having the highest content ratio in the recycled material-containing layer 2. In this case, it becomes easy to improve adhesion to another layer by higher laminate strength.

The auxiliary layer 4 may contain, as necessary, one or two or more kinds of the additives described above.

Furthermore, when the auxiliary layer 4 is given a function as a laminate layer, the arithmetic surface roughness Ra of the surface of the auxiliary layer 4 opposite to the recycled material-containing layer 2, as defined in JIS B 0601:2001, may be 0.03 μm to 5 μm, 0.04 μm to 3 μm, or 0.05 μm to 2 μm. In this case, when another layer is laminated on the laminate layer via an adhesive, it becomes easy to suppress occurrence of lamination defects caused by defective portions where the adhesive does not adhere.

The above Ra in the auxiliary layer 4 can be adjusted by changing the thickness of the auxiliary layer. In this case, from the viewpoints of suppressing lamination defects and reducing costs, the thickness of the auxiliary layer may be 5 μm to 100 μm, 10 μm to 90 μm or 20 μm to 80 μm.

From the viewpoint of reducing environmental load, the sealant film of the present embodiment may be one that does not contain petroleum-derived virgin resin. For example, in the case of the sealant film 1a shown in FIG. 1, the recycled material-containing layer 2 and the sealant layer 3 may not contain petroleum-derived virgin resin, and in the case of the sealant film 1b shown in FIG. 3, the recycled material-containing layer 2, the sealant layer 3, and the auxiliary layer 4 may not contain petroleum-derived virgin resin.

In the sealant film 1b, the electron beam irradiation treatment may be performed from the side opposite to the side where the sealant layer of the sealant film is provided (the auxiliary layer side) (in a case of a packaging material including the sealant film, from the side opposite to the surface in contact with contents or fillers). The sealant film 1b may have the above-described gel fraction.

<Method for producing sealant film>

The sealant film of the present embodiment can be produced by a conventionally known method. For example, a method may be used in which a recycled material-containing film obtained by film-forming a resin composition constituting the recycled material-containing layer is extrusion-laminated with a resin composition constituting the sealant layer, or a method may be used in which the recycled material-containing layer and the sealant layer are film-formed by co-extrusion molding.

In the former method, the recycled material-containing film can be produced by melting a resin composition constituting the recycled material-containing layer with an injection molding machine or an extrusion molding machine (for example, a twin-screw extruder), and then film-forming it with a T-die via a feed block or a multi-manifold, or by film-forming it by an inflation method. The recycled material may be pellets obtained by collecting, washing, and pulverizing various plastic wastes, and then melt-molding them with an extruder. Extrusion lamination may be carried out using an extrusion laminator or the like.

In the latter method, for example, using a multilayer extrusion molding machine, a resin composition constituting the recycled material-containing layer and a resin composition constituting the sealant layer are each melt-kneaded and co-extruded, thereby producing a sealant film.

The resin composition constituting the recycled material-containing layer may contain only a recycled material, or may further contain a virgin resin or additives in order to impart various desired properties such as viscosity adjustment and reinforcement of mechanical properties. In addition, when mixing the recycled material and the virgin resin, the process may be a dry blend in which the virgin resin and the recycled material are simultaneously charged into a hopper and film-formed while melt-kneading, or may be a melt blend in which the virgin material and the recycled material are separately melt-kneaded with a twin-screw extruder and converted into a master batch.

From the viewpoint of reducing the size of aggregates in the recycled material-containing layer, repelletizing using a twin-screw extruder, molding under high shear conditions, or blending a compatibilizer such as an acid-modified polyolefin resin may be employed.

A method for cooling the film can be applied according to the molding machine. For example, in the case of the T-die method, an air-cooling method using an air chamber, a vacuum chamber, an air knife, or the like, or a water-cooling method such as dipping a cooling roll into a cold water pan, can be employed.

In addition, for example, in the case of the T-die method, in order to adjust the above Ra in the sealant layer, when cooling and solidifying a molten resin using a cooling roll having a predetermined surface shape, the predetermined surface shape may be formed on the sealant layer by pressing with a nip roll. As a means of imparting a surface shape by forming, a method may be employed in which the molten resin is allowed to flow into a contact portion between a nip roll obtained by processing silicone rubber, NBR rubber, fluororesin, or the like, and a cooling roll under an applied pressure of 0.1 MPa or more, followed by cooling. The cooling roll may be one obtained by cutting a metal or one in which a shape is imparted by blasting treatment. The surface shape of the cooling roll may be a random concavo-convex shape, and the surface roughness can be adjusted by changing the particle size or processing time (amount) in the blasting treatment. The above Ra in the auxiliary layer can also be adjusted in the same manner as described above.

In addition, the sealant film of the present embodiment can also be produced by a method using heat pressing. In the method using heat pressing, a flat film can be molded by compressing it between heated rolls or heated flat plates. The thickness of the molded article can be controlled by adjusting the pressure applied during compression. A single-layer film produced by heat pressing may be laminated again by heat pressing, or a pre-laminated flat film may be prepared and the film thickness may be adjusted by heat pressing. In addition, as a means of adjusting surface roughness, when forming a predetermined surface shape on the film, the predetermined surface shape may be formed on the surface of a roll or flat plate and transferred. The surface shape may be a random concavo-convex shape, and the surface roughness can be adjusted by changing the particle size or processing time (amount) in the blasting treatment.

In the present embodiment, the sealant film produced as described above can be subjected to electron beam irradiation treatment. By electron beam irradiation, the crosslinking density of the resin contained in the sealant film is increased, and the mechanical strength of the sealant film (in particular, puncture strength) can be improved. The electron beam irradiation treatment is preferably performed from the side opposite to the side where the sealant layer of the sealant film is provided (in a case of a packaging material including the sealant film, from the side opposite to the surface in contact with contents or fillers).

In addition, since the sealant film produced as described above satisfies the above-described conditions in terms of the arithmetic surface roughness of the surface of the sealant layer opposite to the recycled material-containing layer, the mechanical strength (in particular, puncture strength) can be easily improved by electron beam irradiation treatment. Furthermore, since the maximum height H of projections on the above surface of the sealant layer specified by the above method and the ratio [W/H] satisfy the above-described conditions, the mechanical strength (in particular, puncture strength) can be easily improved by electron beam irradiation treatment.

Examples of devices that can be used for electron beam irradiation of the sealant film preferably include conventionally known low-energy types. Examples thereof include curtain-type electron irradiation device (LB 1023, manufactured by I. Electron Beam Co., Ltd.), line-irradiation-type low-energy electron beam irradiation device (EB-ENGINE, manufactured by Hamamatsu Photonics K.K.), and drum-roll-type electron beam irradiation device (EZ-CURE, manufactured by I. Electron Beam Co., Ltd.).

The dose and acceleration voltage of the electron beam irradiated to the sealant film can be appropriately set, and may be appropriately adjusted such that the electron beam does not reach the sealant layer when irradiating the main surface of the sealant film opposite to the sealant layer with electron beam. In this case, the crosslinking density of the sealant layer can be increased by the electron beam, and reduction in the heat sealability of the sealant layer can be suppressed. In addition, the dose, acceleration voltage, and irradiation energy of the electron beam may be adjusted so that the gel fraction of the sealant film falls within the above-described range.

The dose of the electron beam may be 10 kGy to 2000 kGy, or 20 kGy to 500 kGy.

The acceleration voltage of the electron beam may be 30 kV to 300 kV, 50 kV to 300 kV, or 50 kV to 250 kV.

The irradiation energy of the electron beam may be 20 keV to 750 keV, 25 keV to 500 keV, 30 keV to 400 keV, or 20 keV to 200 keV.

The oxygen concentration in the electron beam irradiation device may be 500 ppm or less, or 100 ppm or less. By performing electron beam irradiation under such conditions, generation of ozone can be suppressed, and deactivation of radicals generated by electron beam irradiation due to oxygen in the atmosphere can also be suppressed. Such conditions can be achieved, for example, by providing an inert gas (such as nitrogen or argon) atmosphere in the device.

The sealant film may be subjected to surface modification treatment for improving post-process suitability. For example, in order to improve printability or to improve lamination suitability when laminating with another layer or a base material film, surface modification treatment may be performed on the surface to be laminated. Examples of the surface modification treatment include methods of imparting functional groups by oxidizing the film surface, such as corona discharge treatment, plasma treatment, or flame treatment, and modification by a wet process such as coating of an easy-adhesion layer.

The method for producing the sealant film is not limited to the above-described methods, and the sealant film formed by a molding machine may be subjected to in-line or off-line stretching treatment. In addition, there are no limitations on the addition of other necessary steps or additives as appropriate.

<Laminate>

The laminate of the present embodiment includes the sealant film of the present embodiment described above.

The laminate may include, for example, the sealant film of the present embodiment and a gas barrier layer provided on the surface of the sealant film opposite to the sealant layer.

When the film is used as a food packaging material, a film having gas barrier properties is required The above laminate contains a recycled material including two or more kinds of resins, has sufficient reliability during heat sealing and film formability, and also exhibits excellent gas barrier properties.

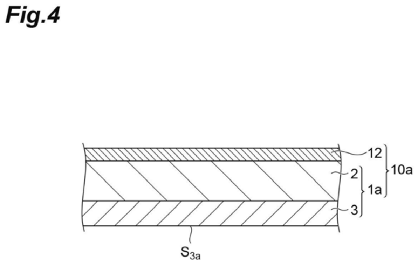

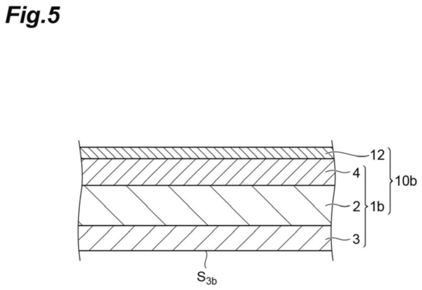

FIG. 4 is a schematic cross-sectional view showing one embodiment of the laminate of the present embodiment. A laminate 10a shown in FIG. 4 includes a sealant film 1a in which a recycled material-containing layer 2 and a sealant layer 3 are laminated, and a gas barrier layer 12 provided on the recycled material-containing layer 2 of the sealant film 1a. FIG. 5 is a schematic cross-sectional view showing another embodiment of the laminate of the present embodiment. A laminate 10b shown in FIG. 5 further includes a gas barrier layer 12 provided on the side of the auxiliary layer 4 opposite to the recycled material-containing layer 2 in the sealant film 1b shown in FIG. 3. The laminates 10a and 10b can have improved gas barrier properties (for example, oxygen barrier properties and water vapor barrier properties). The gas barrier layer may have a single-layer structure or a laminate structure.

In the laminate of the present embodiment, since the gas barrier layer is provided and the surface of the sealant film (in the present embodiment, the surface of the recycled material-containing layer) is smooth, the density of the gas barrier layer (particularly a vapor deposition layer) to be formed can be increased, and gas barrier properties can be improved.

The gas barrier layer can be formed on the surface of the sealant film obtained as described above opposite to the sealant layer (for example, the surface of the recycled material-containing layer or the surface of the auxiliary layer) by a conventionally known method.

Examples of the gas barrier layer 12 include a vapor deposition layer (vapor deposition coating) composed of a metal, an inorganic oxide, or the like, a metal foil such as aluminum foil, and films such as ethylene-vinyl alcohol copolymer, polyamide-based resin, polyvinylidene chloride-based resin, and polyacrylonitrile-based resin.

The vapor deposition layer may have a single-layer structure or a laminate structure. Examples of the vapor deposition layer include vapor deposition layers composed of metals such as aluminum, and inorganic oxides such as aluminum oxide, silicon oxide, magnesium oxide, calcium oxide, zirconium oxide, titanium oxide, boron oxide, hafnium oxide, and barium oxide.

The vapor deposition layer can be formed by using a conventionally known method. The formation method may be appropriately selected according to the deposition material and the like, and examples thereof include physical vapor deposition (PVD) methods such as a vacuum vapor deposition method, a sputtering method, and an ion plating method, and chemical vapor deposition (CVD) methods such as a plasma chemical vapor deposition method, a thermal chemical vapor deposition method, and a photochemical vapor deposition method.

When the vapor deposition layer is an aluminum vapor deposition coating, its OD value may be 2 to 3.5 from the viewpoints of productivity of the laminate, oxygen barrier properties, and water vapor barrier properties. In the present specification, the OD value refers to a value measured in accordance with JIS-K-7361.

When the vapor deposition layer is an inorganic oxide layer using silicon oxide, the O/Si ratio of the inorganic oxide layer may be 1.5 or more from the viewpoint of transparency. In addition, the O/Si ratio may be 2.0 or less from the viewpoint of barrier properties. From the viewpoint of sufficiently obtaining the above effects, the O/Si ratio of the inorganic oxide layer may be 1.5 to 2.0 or 1.6 to 1.8.

The O/Si ratio of the above inorganic oxide layer can be determined by X-ray photoelectron spectroscopy (XPS). For example, measurement can be performed using an X-ray photoelectron spectrometer (manufactured by JEOL Ltd., trade name: JPS-90MXV), with a non-monochromatic MgK$\alpha$ (1253.6 eV) X-ray source at an X-ray output of 100 W (10 kV-10 mA). For quantitative analysis to determine the O/Si ratio, relative sensitivity factors of 2.28 for O1s and 0.9 for Si2p can be used.

The thickness of the vapor deposition layer may be 1 nm to 150 nm, 5 nm to 60 nm, or 5 nm to 40 nm. When the thickness of the vapor deposition layer is 1 nm or more, oxygen barrier properties and water vapor barrier properties are easily obtained. When the thickness of the vapor deposition layer is 150 nm or less, occurrence of cracks in the vapor deposition layer is likely to be prevented, and recyclability of the sealant film is likely to be maintained.

When the gas barrier layer contains a metal foil, the thickness of the metal foil may be 1 $\mu$m to 15 $\mu$m, 3 $\mu$m to 10 $\mu$m, or 5 $\mu$m to 8 $\mu$m, from the viewpoints of gas barrier properties and durability.

When the gas barrier layer contains a resin film, the thickness of the resin film may be 100 nm to 50 $\mu$m, 500 nm to 10 $\mu$m, or 1 $\mu$m to 5 $\mu$m, from the viewpoint of gas barrier properties.

The gas barrier layer may be provided by laminating an inorganic material layer formed by a method other than vapor deposition, a laminated film of a metal foil and a plastic film, or a vapor deposition film in which a vapor deposition layer (vapor deposition coating) composed of a metal or an inorganic oxide described above is provided on a plastic film. Examples of the plastic film include polyesters such as polyethylene terephthalate (PET) and polyethylene naphthalate, polyolefins such as polyethylene and polypropylene, polystyrene, polyamides such as nylon 6, polycarbonate, polyacrylonitrile, and polyimide.

When the gas barrier layer is a resin layer having gas barrier properties, such as EVOH or polyvinyl alcohol resin, the resin layer can also be provided by co-extrusion or wet coating. When the gas barrier layer is the above-described resin film, laminated film, or vapor deposition film, these gas barrier layers can be formed by lamination using an adhesive described below or by extrusion lamination.

The auxiliary layer 4 on which the gas barrier layer is provided may have a configuration similar to that of the above-described sealant layer 3. When the auxiliary layer 4 contains a polyolefin resin, the polyolefin resin preferably has high crystallinity from the viewpoints of printability, vapor deposition suitability, strength, and heat resistance. The polyolefin resin may be a virgin resin.

When the above polyolefin resin is polyethylene, high-density polyethylene (HDPE) and medium-density polyethylene (MDPE) are preferable from the viewpoints of vapor deposition suitability, printability, strength, and heat resistance, and medium-density polyethylene is more preferable from the viewpoint of stretching adequacy. When the above polyolefin resin is polypropylene, the crystallinity determined by heat of fusion obtained using a differential scanning calorimeter (DSC) may be 40% or more, or 45% or more, from the viewpoints of printability, strength, and heat resistance, and may be 60% or less, or 55% or less, from the viewpoint of impact resistance.

The content of non-material-recycled resin (virgin resin, chemically recycled resin, or the like) in the auxiliary layer 4 on which the gas barrier layer is provided can be made higher than the content of non-material-recycled resin in the recycled material-containing layer. In this case, it is possible to smooth partial swelling derived from aggregates on the surface of the recycled material-containing layer and to improve mechanical properties and gas barrier properties of the laminate.

The thickness of the auxiliary layer 4 on which the gas barrier layer is provided may be 20 $\mu$m or more, 40 $\mu$m or more, or 80 $\mu$m or more, from the viewpoints of gas barrier properties and adhesion, and may be 150 $\mu$m or less, 120 $\mu$m or less, or 100 $\mu$m or less, from the viewpoint of suppressing the total thickness when used as a packaging material.

In addition, the laminate may include, for example, the sealant film of the present embodiment, an adhesive layer, and a base material film, in this order.

When producing a packaging material having functions such as design aesthetics and gas barrier properties, a base material film provided with a functional layer such as a print layer or a vapor deposition layer may be bonded to a sealant film with an adhesive. However, if the smoothness of the sealant film is low, bubbles are likely to occur in the resulting laminate, making it prone to appearance defects. The above laminate contains a recycled material including two or more kinds of resins, has sufficient reliability during heat sealing and film formability, and also has excellent appearance.

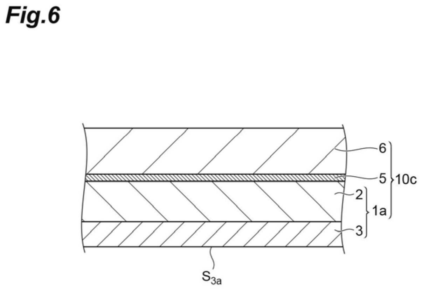

FIG. 6 is a schematic cross-sectional view showing one example of the above laminate. A laminate 10c shown in FIG. 6 includes a sealant film 1a in which a recycled material-containing layer 2 and a sealant layer 3 are laminated, and a base material film 6 laminated on the recycled material-containing layer 2 of the sealant film 1a via an adhesive layer 5.

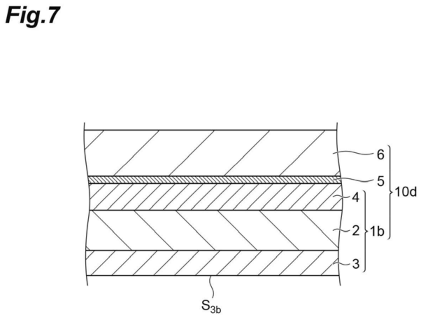

FIG. 7 is a schematic cross-sectional view showing another example of the above laminate. A laminate 10d shown in FIG. 7 includes the sealant film 1b shown in FIG. 3, and a base material film 6 laminated on an auxiliary layer 4 of the sealant film 1b via an adhesive layer 5.

The auxiliary layer 4 in the above laminate may further be provided with a gas barrier layer on the side opposite to the recycled material-containing layer 2. In this case, the laminate can have improved gas barrier properties (for example, oxygen barrier properties and water vapor barrier properties). The gas barrier layer may have a single-layer structure or a laminate structure.

The adhesive layer 5 functions as a layer that bonds the base material film 6 and the sealant film. For example, in the laminate 10c, the recycled material-containing layer 2 of the sealant film and the base material film 6 are bonded via the adhesive layer 5, and in the laminate 10d, the auxiliary layer 4 of the sealant film and the base material film 6 are bonded via the adhesive layer 5.

The laminates shown in FIGS. 6 and 7 can be used as packaging materials.

The base material film 6 is not particularly limited as long as it has mechanical strength and dimensional stability, and plastic films, paper, nonwoven fabrics, and the like can be used. Examples of materials constituting the plastic film include polyesters such as polyethylene terephthalate (PET) and polyethylene naphthalate, polyolefins such as polyethylene and polypropylene, polystyrene, polyamides such as nylon 6, polycarbonate, polyacrylonitrile, and polyimide.

From the viewpoints of mechanical strength and dimensional stability, the base material film 6 is preferably a stretched film.

The base material film 6 can be made into a monomaterial as a whole packaging material by containing a resin of the same type as the resin having the highest content ratio in the sealant film (also referred to as "the same resin"), thereby improving recyclability of the packaging material. In this case, all layers constituting the sealant film (for example, the sealant layer, or the sealant layer and the auxiliary layer) may contain a resin of the same type as the resin having the highest content ratio in the recycled material-containing layer.

The content of the same resin in the laminate (or in the packaging material described below) may be 90 mass% or more based on the total amount of the laminate (or the packaging material). In this case, the laminate (or the packaging material) can be said to be a packaging material made of a monomaterial. The content of the same resin in the laminate (or in the packaging material) may be 92.5 mass% or more, or 95 mass% or more, based on the total amount of the laminate (or the packaging material), from the viewpoint of further improving recyclability.

From the viewpoint of transparency, the haze value of the base material film 6 may be 30% or less, or 20% or less. In the present specification, the haze value of a film means a value measured in accordance with JIS K 7105.

The base material film 6 may be subjected to surface treatment. In this case, adhesion with an adjacent layer can be improved. The method of surface treatment is not particularly limited, and examples thereof include: physical treatments such as corona discharge treatment, ozone treatment, low-temperature plasma treatment using oxygen gas and/or nitrogen gas, and glow discharge treatment; and chemical treatments such as oxidation treatment using chemicals.

An anchor coat layer may be provided on the surface of the base material film 6 using a conventional anchor coat agent.

The thickness of the base material film 6 may be 10 $\mu$m to 50 $\mu$m, or 12 $\mu$m to 30 $\mu$m. When the thickness of the base material film is 10 $\mu$m or more, the strength of the laminate (or the packaging material) can be easily improved. In addition, when the thickness of the base material is 50 $\mu$m or less, processability of the laminate (or the packaging material) can be easily maintained.

The adhesive constituting the adhesive layer 5 is not particularly limited, but a dry lamination adhesive or a solvent-free adhesive can be used. Examples of the dry lamination adhesive include two-component curable urethane-based adhesives, polyester urethane-based adhesives, polyether urethane-based adhesives, acrylic-based adhesives, polyester-based adhesives, polyamide-based adhesives, and epoxy-based adhesives.

When the packaging material is used for a packaging bag for retort use, a two-component curable urethane-based adhesive having retort resistance can be used.

Examples of the solvent-free adhesive include a two-component curable polyurethane-based adhesive in which a main agent such as polyester polyol, polyether polyol, or acrylic polyol is reacted with an aromatic or aliphatic isocyanate compound having two or more functional groups as a curing agent. Such an adhesive forms an adhesive layer by curing through a reaction caused by heating or the like (for example, a reaction between a hydroxyl group of a main agent and an isocyanate group of a curing agent). The adhesive layer in this case can also be referred to as an adhesive layer made of a reaction-cured product of a solvent-free adhesive (also referred to as a "solvent-free adhesive layer").

From the viewpoint of improving adhesiveness, the equivalent ratio of isocyanate groups of the curing agent to hydroxyl groups of the main agent (NCO group/OH group molar ratio) in the solvent-free adhesive may be 0.5 to 5. The fact that the adhesive layer is formed using a solvent-free adhesive instead of a solvent-based adhesive can be analyzed, for example, by Fourier transform infrared spectroscopy.

As the adhesive constituting the adhesive layer, a solvent-free adhesive can be used from the viewpoint of improving the appearance of the laminate. When the base material film and the sealant film are bonded using a dry lamination adhesive, usually, the adhesive dissolved in a solvent is applied to the base material film, and after removing the solvent in a drying furnace, the sealant film is attached. The dry lamination adhesive after removal of the solvent is hard and has low freedom of shape deformation, whereas the solvent-free adhesive has high freedom of shape deformation at the time of bonding, so that the solvent-free adhesive can easily follow the surface shape even in a sealant film having a concavo-convex shape. Therefore, the solvent-free adhesive layer formed using the solvent-free adhesive is less likely to cause bubbles due to voids between the base material film and the sealant film, and adhesion can also be improved.

Meanwhile, the solvent-free adhesive has the feature of having a low environmental load in the manufacturing process and being applicable in a thinner layer than a solvent-based adhesive. Therefore, the adhesive layer formed with the solvent-free adhesive tends to be thin. In the laminate of the present embodiment, when the adhesive layer formed with the solvent-free adhesive is combined with the sealant film according to the present embodiment having a sufficiently small surface roughness, high adhesive strength can be obtained with a smaller coating amount of the adhesive, and a good appearance in which bubble generation is suppressed can be achieved.

From the viewpoint of environmental considerations, the adhesive layer 5 may satisfy at least one of the following conditions:

(1) containing no 3-glycidyloxypropyltrimethoxysilane (GPTMS);
(2) containing a biomass material; and
(3) containing no solvent.

From the viewpoints of suppressing coloration of recycled resin after recycling and suppressing generation of odor due to heat treatment, the adhesive layer 5 may not contain chlorine.

The thickness of the adhesive layer may be 0.3 $\mu$m to 5.0 $\mu$m. From the viewpoint of developing adhesion strength, the thickness of the adhesive layer may be 0.3 $\mu$m or more, 0.5 $\mu$m or more, or 1 $\mu$m or more, and from the viewpoint of recyclability, the thickness of the adhesive layer may be 5.0 $\mu$m or less, 3.5 $\mu$m or less, or 2.5 $\mu$m or less. When the thickness of the adhesive layer is at or below the above upper limit, the proportion of a monomaterial in the packaging material can be increased.

<Packaging material>

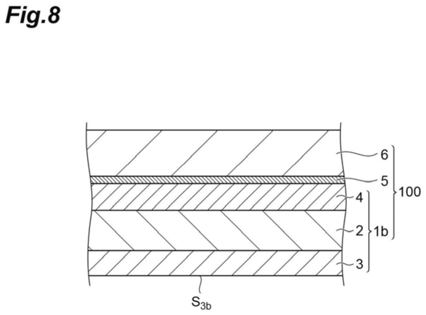

The packaging material of the present embodiment includes the sealant film of the present embodiment described above. FIG. 8 is a schematic cross-sectional view showing one embodiment of a packaging material. A packaging material 100 shown in FIG. 8 includes a sealant film 1b including an auxiliary layer 4, and a base material film 6 laminated on the auxiliary layer 4 via an adhesive layer 5.

The adhesive layer 5 is a layer that bonds the base material film 6 and the sealant film. In the packaging material 10, the auxiliary layer 4 of the sealant film and the base material film 6 are bonded via the adhesive layer 5.

The packaging material of the present embodiment may further include functional layers such as a print layer and a gas barrier layer. These functional layers may be provided on the above base material film.

The print layer may be formed on the surface of the base material film on which the sealant film is provided. In this case, the print layer can be prevented from coming into contact with outside air, and deterioration over time can be prevented.

The print layer may represent characters, patterns, symbols, combinations thereof, and the like.

From the viewpoint of producing a packaging material with a lower environmental load, the print layer may be formed using biomass-derived ink.

The method of forming the print layer is not particularly limited, and a conventionally known printing method such as a gravure printing method, an offset printing method, or a flexographic printing method can be used. Among these, a flexographic printing method may be used from the viewpoint of environmental load.

The gas barrier layer can be provided on the base material film and may have the same configuration as the gas barrier layer 12 described above.

In addition, the gas barrier layer may be provided by laminating a laminated film of a metal foil and a plastic film, or a vapor deposition film in which a vapor deposition layer (vapor deposition coating) composed of a metal or an inorganic oxide described above is provided on a plastic film. Examples of the plastic film include polyesters such as polyethylene terephthalate (PET) and polyethylene naphthalate, polyolefins such as polyethylene and polypropylene, polystyrene, polyamides such as nylon 6, polycarbonate, polyacrylonitrile, and polyimide.

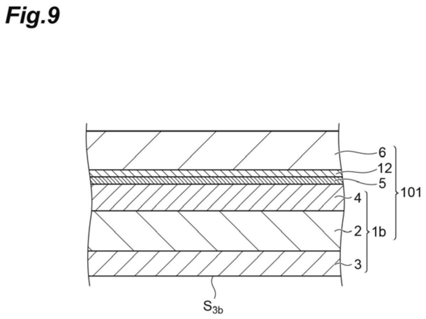

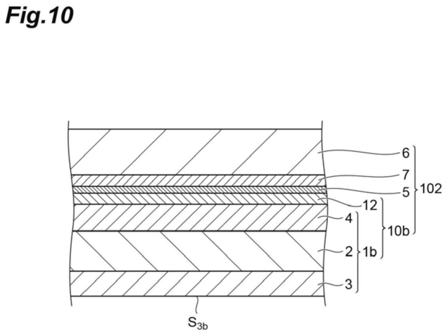

FIGS. 9 and 10 are schematic cross-sectional views showing other embodiments of the packaging material.

A packaging material 101 shown in FIG. 9 includes a sealant film 1b including an auxiliary layer 4, and a base material film 6 which has a gas barrier layer 12 and is laminated on the auxiliary layer 4 via an adhesive layer 5.

A packaging material 102 shown in FIG. 10 includes: a laminate 10b in which a sealant film 1b having a laminate structure of a sealant layer 3, a recycled material-containing layer 2, and an auxiliary layer 4, and a gas barrier layer 12 are laminated in this order; and a base material film 6 having a print layer 7 bonded via an adhesive layer 5 on the gas barrier layer 12 side of the laminate. In the packaging material 102, as described above, the print layer 7 is formed on the surface of the base material film 6 on which the sealant film is provided.

Each layer in the packaging material of the present embodiment may contain the additives described above.

The packaging material of the present embodiment can be modified in various ways other than the above-described configuration, and may have the following configurations:

(a) the sealant film of the present embodiment / an adhesive layer / a gas barrier film / an adhesive layer / a base material film;
(b) the sealant film of the present embodiment / an adhesive layer / a gas barrier film;
(c) the sealant film of the present embodiment / a gas barrier layer (for example, a vapor deposition layer) / an adhesive layer / a base material film.

As the gas barrier film described above, the base material film having a gas barrier layer described above, a laminated film of a metal foil and a plastic film, or a vapor deposition film may be used. In addition, a metal foil such as aluminum foil, and a film such as an ethylene-vinyl alcohol copolymer, a polyamide-based resin, a polyvinylidene chloride-based resin, or a polyacrylonitrile-based resin may be used.

The packaging material may include: a sealant film including an auxiliary layer; a first base material film laminated on the auxiliary layer via an adhesive layer; and a second base material film having a print layer laminated on the first base material film via an adhesive layer. In addition, the packaging material may include a sealant film including an auxiliary layer and a first base material film laminated on the auxiliary layer via an adhesive layer, may include a sealant film including an auxiliary layer, a first base material film laminated on the auxiliary layer via an adhesive layer, and a gas barrier layer provided on the first base material film, or may include a sealant film including an auxiliary layer, a first base material film laminated on the auxiliary layer via an adhesive layer, and two or more functional layers, such as a gas barrier layer and a print layer, provided on the first base material film.

In the packaging material of the present embodiment (or the laminate of the present embodiment), from the viewpoint of material recycling, the content of the plastic material contained in the recycled material may be 10 mass% or more, or 25 mass% or more, based on the total amount of plastic materials in the packaging material (or the laminate). When the packaging material of the present embodiment is a laminated packaging material, materials other than plastic (for example, adhesives, printing inks, aluminum foil, and the like) may be excluded from the weight calculation.

Examples of the plastic material (so-called recycled plastic) contained in the recycled material include resins contained in the recycled material contained in the recycled material-containing layer according to the present embodiment described above. Pre-consumer materials among the recycled plastics may be calculated by multiplying their weight by 1/2.

The packaging material of the present embodiment (or the laminate of the present embodiment) can be used for a standing pouch, a three-side-sealed bag, a pin-sealed bag, a gusseted bag, a spout-attached pouch, a beak-attached pouch, and the like.

<Packaging bag>

The packaging bag of the present embodiment is produced from the packaging material of the present embodiment described above. The bag-making style of the packaging bag is not particularly limited, and the packaging bag may be a standing pouch, a three-side-sealed bag, a pin-sealed bag, a gusseted bag, a spout-attached pouch, a beak-attached pouch, and the like.

Examples

Hereinafter, the present invention will be described specifically with reference to examples. However, the present invention is not limited by these examples.

<Preparation of material-recycled material>

(Recycled material 1)

A film in which an LLDPE film (manufactured by Mitsui Chemicals Tohcello, Inc., product name "TUX FC-S," film thickness: 100 μm), an adhesive layer, a PET film (manufactured by Toray Advanced Film Co., Ltd., product name "VM-PET 1310," film thickness: 12 μm, aluminum vapor deposition), an adhesive layer, and a Ny film (manufactured by Toyobo Co., Ltd., product name "Harden Film N1100," film thickness: 15 μm) were laminated in this order was compressed and cut, and then molded into granules to obtain recycled material 1. The adhesive layer was formed by dry lamination using an adhesive obtained by mixing DICDRY LX-500 (manufactured by DIC Graphics Corporation, product name) as a main agent, KW75 (manufactured by DIC Graphics Corporation, product name) as a curing agent, and NC401 (manufactured by Toyo Ink Co., Ltd., product name) as a solvent.

(Recycled material 2)

A film in which an LLDPE film (manufactured by Mitsui Chemicals Tohcello, Inc., product name "TUX FC-S," film thickness: 100 μm), an adhesive layer, a HDPE film (manufactured by Tamapoly Co., Ltd., product name "HF31," film thickness: 35 μm), an adhesive layer, and an HDPE film (manufactured by Tamapoly Co., Ltd., product name "HF31," film thickness: 35 μm) were laminated in this order was compressed and cut, and then molded into granules to obtain recycled material 2. The adhesive layer was formed in the same manner as in recycled material 1.

<Preparation of chemically recycled resin>

(CR-PE)

Ethylene produced from naphtha obtained by anaerobic pyrolysis of waste plastic was polymerized to obtain chemically recycled polyethylene (density: 0.94 g/cm$^3$, MFR: 1.0 g/10 min).

(CR-PP)

Propylene produced from naphtha obtained by anaerobic pyrolysis of waste plastic was polymerized to obtain chemically recycled polypropylene (crystallinity: 48%, MFR: 1.2 g/10 min).

<Preparation of biomass-derived polyethylene-based resin>

(Biomass LLDPE)

Biomass-derived LLDPE "SLL118" (manufactured by Braskem S.A., trade name, density: 0.916 g/cm$^3$, MFR: 1.3 g/10 min, biomass degree: 87%) was prepared.

<Preparation of inorganic particles>

(Inorganic particles 1)

As inorganic particles, titanium oxide (manufactured by DIC Corporation, titanium oxide PEONY HP WHITE series, model No. L-11232-MPT) was prepared.

<Production of sealant film A>

(Example A1)

Recycled material 1 was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 μm and a sealant layer having a thickness of 70 μm were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting.

(Example A2)

A sealant film was produced in the same manner as in Example A1, except that the extrusion amount of each layer was adjusted (the screw rotation speed during extrusion of the recycled material-containing layer was changed to 43 rpm) so that a recycled material-containing layer having a thickness of 80 μm and a sealant layer having a thickness of 20 μm were film-formed.

(Example A3)

A sealant film was produced in the same manner as in Example A1, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example A4)

A sealant film was produced in the same manner as in Example A1, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted so that a recycled material-containing layer having a thickness of 90 $\mu$m and a sealant layer having a thickness of 10 $\mu$m were film-formed.

(Example A5)

A sealant film was produced in the same manner as in Example A1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Example A6)

A sealant film was produced in the same manner as in Example A5, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example A7)

A sealant film was produced in the same manner as in Example A5, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Example A8)

A sealant film was produced in the same manner as in Example A5, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example A9)

A sealant film was produced in the same manner as in Example A2, except that recycled material 1 and LLDPE (manufactured by Prime Polymer Co., Ltd., product name "Evolue SP2040") were charged into a hopper for extruding a recycled material-containing layer at a weight ratio of 1:1.

(Example A10)

A sealant film was produced in the same manner as in Example A2, except that block polypropylene resin (bPP) (manufactured by Japan Polypropylene Corporation, product name "Novatec PP BC6DRF") to which 6000 ppm of an anti-blocking agent (manufactured by Prime Polymer Co., Ltd., product name "EAZ-20") had been added by dry blending was charged into a hopper for extruding a sealant layer.

(Example A11)

Recycled material 1 alone was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer, and LLDPE (manufactured by Prime Polymer Co., Ltd., product name "Evolue SP1540") was charged into a hopper for extruding an auxiliary layer. Using a single-screw multilayer extruder, an auxiliary layer having a thickness of 20 $\mu$m, a recycled material-containing layer having a thickness of 80 $\mu$m, and a sealant layer having a thickness of 20 $\mu$m were film-formed in this order by co-extrusion molding to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting, thereby producing a sealant film.

(Comparative Example A1)

A sealant film was produced in the same manner as in Example A1, except that no anti-blocking agent was added to the sealant layer.

(Comparative Example A2)

A sealant film was produced in the same manner as in Example A1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Comparative Example A3)

A sealant film was produced in the same manner as in Example A1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Comparative Example A4)

A sealant film was produced in the same manner as in Example A1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed.

(Comparative Example A5)

A sealant film was produced in the same manner as in Example A1, except that the amount of the anti-blocking agent added was changed to 600 ppm.

<Surface roughness of sealant layer>

In accordance with JIS B 0601:2001, the arithmetic surface roughness Ra of the surface of the sealant layer opposite to the recycled material-containing layer was measured.

<Reliability evaluation during sealing>

Using a heat sealer (model No. TP-701-B) manufactured by Tester Sangyo Co., Ltd., heat-seal layers of the sealant film were overlapped and sealed at a sealing pressure of 0.2 MPa, a sealing time of 1 second, and a sealing width of 10 mm. The heat-sealing temperature was set to a temperature about 20°C higher than the melting point of the material of the heat-seal layer (130°C for LLDPE, 180°C for PP). Thereafter, the heat-sealed portion was observed with a microscope, and the area percentage of bubbles present in an observation area of 1 mm$^2$ was determined. The area percentage of bubbles was rated as "⊙" for 0% to less than 5%, "○" for 5% to less than 10%, "△" for 10% to less than 20%, and "×" for 20% or more.

<Projection of laminate layer>

Using a laser microscope (VK-X200/VK-X210) manufactured by Keyence Corporation, the maximum height H of a projection (the difference in height between the highest peak and the deepest valley within a predetermined section) on the surface of the laminate layer opposite to the recycled material-containing layer and the width W at half the maximum height H of the projection were measured, and the ratio [W/H] of the maximum height H was calculated.

<Evaluation of film formability>

From film formation to winding, appearance was visually observed, and film formability was evaluated based on the following criteria:

"○": No folding or wrinkles were observed from film formation to winding, and no appearance defects were observed due to folding or wrinkles in the film after winding.
"×": Folding or wrinkles occur from film formation to winding, and appearance defects are observed due to folding or wrinkles in the film after winding.

[Table 1]

| | | | Example A1 | Example A2 | Example A3 | Example A4 | Example A5 | Example A6 | Example A7 | Example A8 |
|---|---|---|---|---|---|---|---|---|---|---|
| Sealant film | Recycled material-containing layer | Material | Recycled material 1 | Recycled material 1 | Recycled material 1 | Recycled material 1 | Recycled material 2 | Recycled material 2 | Recycled material 2 | Recycled material 2 |
| | | Thickness ($\mu$m) | 30 | 80 | 90 | 90 | 80 | 90 | 95 | 90 |
| | Sealant layer | Material | LLDPE | LLDPE | LLDPE | LLDPE | LLDPE | LLDPE | LLDPE | LLDPE |
| | | Additive | Anti-blocking agent | Anti-blocking agent | Anti-blocking agent | Anti-blocking agent | Anti-blocking agent | Anti-blocking agent | Anti-blocking agent | Anti-blocking agent |
| | | Thickness ($\mu$m) | 70 | 20 | 10 | 10 | 20 | 10 | 5 | 10 |
| | | Arithmetic average surface roughness Ra ($\mu$m) | 0.5 | 2.0 | 5.0 | 2.0 | 0.5 | 2.0 | 5.0 | 2.0 |
| | | Maximum height H of projection ($\mu$m) | 2 | 7 | 10 | 6 | 2 | 8 | 10 | 6 |
| | | Ratio [W/H] | 1 | 10 | 20 | 10 | 1 | 12 | 20 | 10 |
| | Auxiliary layer | Material | - | - | - | - | - | - | - | - |
| | | Thickness ($\mu$m) | - | - | - | - | - | - | - | - |
| Evaluation | Reliability during heat sealing | | ⊙ | ○ | △ | ○ | ○ | ○ | ○ | ○ |
| | Film formability | | ○ | ○ | ○ | ○ | ○ | ○ | ○ | ○ |

EP 4 714 654 A1

22

[Table 2]

| | | | Example A9 | Example A10 | Example A11 | Comparative Example A1 | Comparative Example A2 | Comparative Example A3 | Comparative Example A4 | Comparative Example A5 |
|---|---|---|---|---|---|---|---|---|---|---|
| Sealant film | Recycled material-containing layer | Material | Recycled material 1 (50 mass%) and LLDPE (50 mass%) | Recycled material 1 | Recycled material 1 | Recycled material 1 | Recycled material 1 | Recycled material 2 | Recycled material 2 | Recycled material 1 |
| | | Thickness (μm) | 80 | 80 | 80 | 30 | 95 | 80 | 98 | 30 |
| | Sealant layer | Material | LLDPE | PP | LLDPE | LLDPE | LLDPE | LLDPE | LLDPE | LLDPE |
| | | Additive | Anti-blocking agent | Anti-blocking agent | Anti-blocking agent | - | Anti-blocking agent | - | Anti-blocking agent | Anti-blocking agent |
| | | Thickness (μm) | 20 | 20 | 20 | 70 | 5 | 20 | 2 | 70 |
| | | Arithmetic average surface roughness Ra (μm) | 1.0 | 1.5 | 2.0 | 0.1 | 5.5 | 0.1 | 5.5 | 0.3 |
| | | Maximum height H of projection (μm) | 3 | 6 | 7 | 0.2 | 12 | 0.2 | 12 | 0.4 |
| | | Ratio [W/H] | 5 | 8 | 10 | 5 | 22 | 5 | 22 | 2 |
| | Auxiliary layer | Material | - | - | LLDPE | - | - | - | - | - |
| | | Thickness (μm) | - | - | 20 | - | - | - | - | - |
| Evaluation | | Reliability during heat sealing | ⊙ | ○ | ○ | ⊙ | × | ⊙ | × | ⊙ |
| | | Film formability | ○ | | ○ | ○ | × | ○ | × | ○ | × |

EP 4 714 654 A1

23

As shown in Tables 1 and 2, it was confirmed that the sealant films of Examples A1 to A11 contained a recycled material and had sufficient reliability during heat sealing and film formability. Accordingly, according to the present invention, material recycling of a recycled material containing two or more kinds of resins can be realized in a sealant film or a packaging material.

<Production of sealant film B>

(Example B1)

Recycled material 1 was charged into a hopper for extruding a recycled material-containing layer, and CR-PE to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 $\mu$m and a sealant layer having a thickness of 70 $\mu$m were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting.

(Example B2)

A sealant film was produced in the same manner as in Example B1, except that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Example B3)

A sealant film was produced in the same manner as in Example B1, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example B4)

A sealant film was produced in the same manner as in Example B1, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted so that a recycled material-containing layer having a thickness of 90 $\mu$m and a sealant layer having a thickness of 10 $\mu$m were film-formed.

(Example B5)

A sealant film was produced in the same manner as in Example B1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Example B6)

A sealant film was produced in the same manner as in Example B5, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example B7)

A sealant film was produced in the same manner as in Example B5, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Example B8)

A sealant film was produced in the same manner as in Example B5, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example B9)

A sealant film was produced in the same manner as in Example B2, except that recycled material 1 and CR-PE were charged into a hopper for extruding a recycled material-containing layer at a weight ratio of 1:1.

(Example B10)

A sealant film was produced in the same manner as in Example B2, except that CR-PP to which 6000 ppm of an anti-blocking agent (manufactured by Prime Polymer Co., Ltd., product name "EAZ-20") had been added by dry blending was charged into a hopper for extruding a sealant layer.

(Example B11)

Recycled material 1 alone was charged into a hopper for extruding a recycled material-containing layer, CR-PE to which 6000 ppm of an anti-blocking agent (manufactured by Prime Polymer Co., Ltd., product name "EAZ-20") had been added by dry blending was charged into a hopper for extruding a sealant layer, and CR-PE was charged into a hopper for extruding an auxiliary layer. Using a single-screw multilayer extruder, an auxiliary layer having a thickness of 20 $\mu$m, a recycled material-containing layer having a thickness of 80 $\mu$m, and a sealant layer having a thickness of 20 $\mu$m were film-formed in this order to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting, thereby producing a sealant film.

(Comparative Example B1)

A sealant film was produced in the same manner as in Example B1, except that no anti-blocking agent was added to the sealant layer.

(Comparative Example B2)

A sealant film was produced in the same manner as in Example B1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Comparative Example B3)

A sealant film was produced in the same manner as in Example B1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Comparative Example B4)

A sealant film was produced in the same manner as in Example B1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 μm and a sealant layer having a thickness of 2 μm were film-formed.

(Comparative Example B5)

A sealant film was produced in the same manner as in Example B1, except that the amount of the anti-blocking agent added was changed to 600 ppm.

<Evaluation of sealant film>

In the same manner as described above, the surface roughness of each sealant layer was measured, the reliability during sealing, the projections of the laminate layer, and the film formability were evaluated, and the environmental load was further evaluated as described below.

(Environmental load)

The environmental load of each sealant film was evaluated based on the following criteria.

[Determination criteria] ⊙: The content of plastic material contained in the recycled material (including a chemically recycled resin) in the sealant film is 100 mass% based on the total amount of plastic materials in the sealant film, and the content of the material-recycled material is 50 mass% or more based on the total mass of the sealant film.
O: The content of plastic material contained in the recycled material (including a chemically recycled resin) in the sealant film is 100 mass% based on the total amount of plastic materials in the sealant film, and the content of the material-recycled material is less than 50 mass%.
△: The content of plastic material contained in the recycled material (including a chemically recycled resin) in the sealant film is 90 mass% to less than 100 mass% based on the total amount of plastic materials in the sealant film.
×: The content of plastic material contained in the recycled material (including a chemically recycled resin) in the sealant film is less than 90 mass% based on the total amount of plastic materials in the sealant film.

[Table 3]

| | | | Example B1 | Example B2 | Example B3 | Example B4 | Example B5 | Example B | Example B7 | Example B8 |
|---|---|---|---|---|---|---|---|---|---|---|
| Sealant film | Recycled material-containing layer | Material | Recycled material 1 | Recycled material 1 | Recycled material 1 | Recycled material 1 | Recycled material 2 | Recycled material 2 | Recycled material 2 | Recycled material 2 |
| | | Thickness ($\mu$m) | 30 | 80 | 90 | 90 | 80 | 90 | 95 | 90 |
| | Sealant layer | Material | CR-PE | CR-PE | CR-PE | CR-PE | CR-PE | CR-PE | CR-PE | CR-PE |
| | | Additive | Anti-blocking agent | Anti-blocking agent | Anti-blocking agent | Anti-blocking agent | Anti-blocking agent | Anti-blocking agent | Anti-blocking agent | Anti-blocking agent |
| | | Thickness ($\mu$m) | 70 | 20 | 10 | 10 | 20 | 10 | 5 | 10 |
| | | Arithmetic average surface roughness Ra ($\mu$m) | 0.5 | 2.0 | 5.0 | 2.0 | 0.5 | 2.0 | 5.0 | 2.0 |
| | | Maximum height H of projection ($\mu$m) | 2 | 7 | 10 | 6 | 2 | 8 | 10 | 6 |
| | | Ratio [W/H] | 1 | 10 | 20 | 10 | 1 | 12 | 20 | 10 |
| | Auxiliary layer | Material | - | - | - | - | - | - | - | - |
| | | Thickness ($\mu$m) | - | - | - | - | - | - | - | - |
| Evaluation | Reliability during heat sealing | | ⊙ | ○ | △ | ○ | ⊙ | ○ | ○ | ○ |
| | Film formability | | ○ | ○ | ○ | ○ | ○ | ○ | ○ | ○ |
| | Environmental load | | ○ | ⊙ | ⊙ | ○ | ⊙ | ⊙ | ⊙ | ⊙ |

[Table 4]

| | | | Example B9 | Example B10 | Example B11 | Comparative Example B1 | Comparative Example B2 | Comparative Example B3 | Comparative Example B4 | Comparative Example B5 |
|---|---|---|---|---|---|---|---|---|---|---|
| Sealant film | Recycled material-containing layer | Material | Recycled material 1 (50 mass%) and CR-PE (50 mass%) | Recycled material 1 | Recycled material 1 | Recycled material 1 | Recycled material 1 | Recycled material 2 | Recycled material 2 | Recycled material 1 |
| | | Thickness (μm) | 80 | 80 | 80 | 30 | 95 | 80 | 98 | 30 |
| | Sealant layer | Material | CR-PE | CR-PP | CR-PE | LLDPE | LLDPE | LLDPE | LLDPE | LLDPE |
| | | Additive | Anti-blocking agent | Anti-blocking agent | Anti-blocking agent | - | Anti-blocking agent | - | Anti-blocking agent | Anti-blocking agent |
| | | Thickness (μm) | 20 | 20 | 20 | 70 | 5 | 20 | 2 | 70 |
| | | Arithmetic average surface roughness Ra (μm) | 1.0 | 1.5 | 2.0 | 0.1 | 5.5 | 0.1 | 5.5 | 0.3 |
| | | Maximum height H of projection (μm) | 3 | 6 | 7 | 0.2 | 12 | 0.2 | 12 | 0.4 |
| | | Ratio [W/H] | 5 | 8 | 10 | 5 | 22 | 5 | 22 | 2 |
| | Auxiliary layer | Material | - | - | CR-PE | - | - | - | - | - |
| | | Thickness (μm) | - | - | 20 | - | - | - | - | - |
| Evaluation | | Reliability during heat sealing | ⊙ | ○ | ○ | ⊙ | × | ⊙ | × | ⊙ |
| | | Film formability | ○ | ○ | ○ | × | ○ | × | ○ | × |
| | | Environmental load | ○ | ⊙ | ⊙ | × | △ | △ | △ | × |

As shown in Tables 3 and 4, it was confirmed that the sealant films of Examples B1 to B11 contained a recycled material and had sufficient reliability during heat sealing and film formability. Accordingly, according to the present invention, material recycling of a recycled material containing two or more kinds of resins can be realized in a sealant film or a packaging material.

<Production of sealant film C>

(Example C1)

Recycled material 1 was charged into a hopper for extruding a recycled material-containing layer, and biomass LLDPE to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 $\mu$m and a sealant layer having a thickness of 70 $\mu$m were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting.

(Example C2)

A sealant film was produced in the same manner as in Example C1, except that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Example C3)

A sealant film was produced in the same manner as in Example C1, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example C4)

A sealant film was produced in the same manner as in Example C1, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted so that a recycled material-containing layer having a thickness of 90 $\mu$m and a sealant layer having a thickness of 10 $\mu$m were film-formed.

(Example C5)

A sealant film was produced in the same manner as in Example C1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Example C6)

A sealant film was produced in the same manner as in Example C5, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example C7)

A sealant film was produced in the same manner as in Example C5, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Example C8)

A sealant film was produced in the same manner as in Example C5, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example C9)

A sealant film was produced in the same manner as in Example C2, except that recycled material 1 and biomass LLDPE were charged into a hopper for extruding a recycled material-containing layer at a weight ratio of 1:1.

(Example C10)

Recycled material 1 alone was charged into a hopper for extruding a recycled material-containing layer, biomass LLDPE to which 6000 ppm of an anti-blocking agent (manufactured by Prime Polymer Co., Ltd., product name "EAZ-20") had been added by dry blending was charged into a hopper for extruding a sealant layer, and biomass LLDPE was charged into a hopper for extruding an auxiliary layer. Using a single-screw multilayer extruder, an auxiliary layer having a thickness of 20 $\mu$m, a recycled material-containing layer having a thickness of 80 $\mu$m, and a sealant layer having a thickness of 20 $\mu$m were film-formed in this order to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting, thereby producing a sealant film.

(Comparative Example C1)

A sealant film was produced in the same manner as in Example C1, except that no anti-blocking agent was added to the sealant layer.

(Comparative Example C2)

A sealant film was produced in the same manner as in Example C1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Comparative Example C3)

A sealant film was produced in the same manner as in Example C1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Comparative Example C4)

A sealant film was produced in the same manner as in Example C1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed.

(Comparative Example C5)

A sealant film was produced in the same manner as in Example C1, except that the amount of the anti-blocking agent added was changed to 600 ppm.

<Evaluation of sealant film>

In the same manner as described above, the surface roughness of each sealant layer was measured, the reliability during sealing, the projections of the laminate layer, and the film formability were evaluated, and the biomass degree was further evaluated as described below.

(Biomass degree)

The biomass degree of each sealant film was evaluated by calculating the content of biomass-derived carbon based on radioactive carbon (C14) concentration measurement, according to the following determination criteria.

[Determination criteria] ⊙: The content of biomass raw material in the sealant film is 30 mass% or more based on the total mass of the sealant film.
O: The content of biomass raw material in the sealant film is 15 mass% to less than 30 mass% based on the total mass of the sealant film.
△: The content of biomass raw material in the sealant film is 5 mass% to less than 15 mass% based on the total mass of the sealant film.
×: The content of biomass raw material in the sealant film is less than 5 mass% based on the total mass of the sealant film.

[Table 5]

| | | | Example C1 | Example C2 | Example C3 | Example C4 | Example C5 | Example C6 | Example C7 | Example C8 |
|---|---|---|---|---|---|---|---|---|---|---|
| Sealant film | Recycled material-containing layer | Material | Recycled material 1 | Recycled material 1 | Recycled material 1 | Recycled material 1 | Recycled material 2 | Recycled material 2 | Recycled material 2 | Recycled material 2 |
| | | Thickness ($\mu$m) | 30 | 80 | 90 | 90 | 80 | 90 | 95 | 90 |
| | Sealant layer | Material | Biomass LLDPE | Biomass LLDPE | Biomass LLDPE | Biomass LLDPE | Biomass LLDPE | Biomass LLDPE | Biomass LLDPE | Biomass LLDPE |
| | | Additive | Anti-blocking agent | Anti-blocking agent | Anti-blocking agent | Anti-blocking agent | Anti-blocking agent | Anti-blocking agent | Anti-blocking agent | Anti-blocking agent |
| | | Thickness ($\mu$m) | 70 | 20 | 10 | 10 | 20 | 10 | 5 | 10 |
| | | Arithmetic average surface roughness Ra ($\mu$m) | 0.5 | 2.0 | 5.0 | 2.0 | 0.5 | 2.0 | 5.0 | 2.0 |
| | | Maximum height H of projection ($\mu$m) | 2 | 7 | 10 | 6 | 2 | 8 | 10 | 6 |
| | | Ratio [W/H] | 1 | 10 | 20 | 10 | 1 | 12 | 20 | 10 |
| | Auxiliary layer | Material | - | - | - | - | - | - | - | - |
| | | Thickness ($\mu$m) | - | - | - | - | - | - | - | - |
| Evaluation | Reliability during heat sealing | | ⊙ | ○ | △ | ○ | ⊙ | ○ | ○ | ○ |
| | Film formability | | ○ | ○ | ○ | ○ | ○ | ○ | ○ | ○ |
| | Biomass degree | | ⊙ | ○ | △ | △ | ○ | △ | △ | △ |

[Table 6]

| | | | Example C9 | Example C10 | Comparative Example C1 | Comparative Example C2 | Comparative Example C3 | Comparative Example C4 | Comparative Example C5 |
|---|---|---|---|---|---|---|---|---|---|
| Sealant film | Recycled material-containing layer | Material | Recycled material 1 (50 mass%) and biomass LLDPE (50 mass%) | Recycled material 1 | Recycled material 1 | Recycled material 1 | Recycled material 2 | Recycled material 2 | Recycled material 1 |
| | | Thickness (µm) | 80 | 80 | 30 | 95 | 80 | 98 | 30 |
| | Sealant layer | Material | Biomass LLDPE | Biomass LLDPE | LLDPE | LLDPE | LLDPE | LLDPE | LLDPE |
| | | Additive | Anti-blocking agent | Anti-blocking agent | - | Anti-blocking agent | - | Anti-blocking agent | Anti-blocking agent |
| | | Thickness (µm) | 20 | 20 | 70 | 5 | 20 | 2 | 70 |
| | | Arithmetic average surface roughness Ra (µm) | 1.0 | 2.0 | 0.1 | 5.5 | 0.1 | 5.5 | 0.3 |
| | | Maximum height H of projection (µm) | 3 | 7 | 0.2 | 12 | 0.2 | 12 | 0.4 |
| | | Ratio [W/H] | 5 | 10 | 5 | 22 | 5 | 22 | 2 |
| | Auxiliary layer | Material | - | Biomass LLDPE | - | - | - | - | - |
| | | Thickness (µm) | | 20 | - | - | - | - | - |
| Evaluation | | Reliability during heat sealing | ⊙ | ○ | ⊙ | × | ⊙ | × | ⊙ |
| | | Film formability | ○ | ○ | × | ○ | × | ○ | × |
| | | Biomass degree | ○ | ⊙ | × | × | × | × | × |

As shown in Tables 5 and 6, it was confirmed that the sealant films of Examples C1 to C10 contained a recycled material and had sufficient reliability during heat sealing and film formability. In addition, the sealant films of Examples C1 to C10 also contained 5 mass% or more of a biomass raw material, thereby making it possible to increase the biomass degree of plastic-containing products. Accordingly, according to the present invention, material recycling of a recycled material containing two or more kinds of resins can be realized in a sealant film or a packaging material.

<Production of sealant film D>

(Example D1)

Recycled material 1 was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 μm and a sealant layer having a thickness of 70 μm were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting.

The surface of the above-obtained sealant film opposite to the sealant layer was irradiated with electron beams under the following conditions using an electron beam irradiation device (line-irradiation-type low-energy electron beam irradiation device EES-L-DP01, manufactured by Hamamatsu Photonics K.K.).

(Irradiation conditions)

Voltage: 120 kV
Irradiation dose: 100 kGy
Oxygen concentration in device: 100 ppm or less
Line speed: 25 m/min

(Example D2)

A sealant film was produced and irradiated with electron beams in the same manner as in Example D1, except that the extrusion amount of each layer was adjusted (the screw rotation speed during extrusion of the recycled material-containing layer was changed to 43 rpm) so that a recycled material-containing layer having a thickness of 80 μm and a sealant layer having a thickness of 20 μm were film-formed.

(Example D3)

A sealant film was produced and irradiated with electron beams in the same manner as in Example D1, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed.

(Example D4)

A sealant film was produced and irradiated with electron beams in the same manner as in Example D1, except that the molten resin was cooled under a pressure condition of 1.4 MPa using a nip roll (material: fluororesin) and a cooling roll having a matte concavo-convex shape (surface roughness Rz: 6 μm) formed by sandblasting, and that the extrusion amount of each layer was adjusted so that a recycled material-containing layer having a thickness of 90 μm and a sealant layer having a thickness of 10 μm were film-formed.

(Example D5)

A sealant film was produced and irradiated with electron beams in the same manner as in Example D1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 μm and a sealant layer having a thickness of 20 μm were film-formed.

(Example D6)

A sealant film was produced in the same manner as in Example D5, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed, and the sealant film was irradiated with electron beams under the same conditions as in Example D1.

(Example D7)

A sealant film was produced in the same manner as in Example D5, except that the extrusion amount of each layer was adjusted (the screw rotation speed during extrusion of the recycled material-containing layer was changed to 51 rpm) so that a recycled material-containing layer having a thickness of 95 μm and a sealant layer having a thickness of 5 μm were film-formed, and the sealant film was irradiated with electron beams under the same conditions as in Example D1.

(Example D8)

A sealant film was produced in the same manner as in Example D5, except that the molten resin was cooled under a pressure condition of 1.4 MPa using a nip roll (material: fluororesin) and a cooling roll having a matte concavo-convex shape (surface roughness Rz: 6 μm) formed by sandblasting, and that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed, and the sealant film was irradiated with electron beams under the same conditions as in Example D1.

(Example D9)

A sealant film was produced in the same manner as in Example D2, except that recycled material 1 and LLDPE (manufactured by Prime Polymer Co., Ltd., product name "Evolue SP2040") were charged into a hopper for extruding a recycled material-containing layer at a weight ratio of 1:1, and the sealant film was irradiated with electron beams under the same conditions as in Example D1.

(Example D10)

A sealant film was produced in the same manner as in Example D2, except that block PP (manufactured by Japan Polypropylene Corporation, product name " Novatec PP BC6DRF") to which 6000 ppm of an anti-blocking agent (manufactured by Prime Polymer Co., Ltd., product name "EAZ-20") had been added by dry blending was charged into a hopper for extruding a sealant layer, and the sealant film was irradiated with electron beams under the same conditions as in Example D1.

(Example D11)

Recycled material 1 alone was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer, and LLDPE (manufactured by Prime Polymer Co., Ltd., product name "Evolue SP1540") was charged into a hopper for extruding an auxiliary layer. Using a single-screw multilayer extruder, an auxiliary layer having a thickness of 20 μm, a recycled material-containing layer having a thickness of 80 μm, and a sealant layer having a thickness of 20 μm were film-formed in this order by co-extrusion molding to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting, thereby producing a sealant film.

The sealant film obtained above was irradiated with electron beams in the same manner as in Example D1.

(Reference Example 1)

A commercially available PE sealant film (manufactured by Tamapoly Co., Ltd., product name "MZ434") was prepared.

(Comparative Example D1)

A sealant film was produced and irradiated with electron beams in the same manner as in Example D1, except that no anti-blocking agent was added to the sealant layer.

(Comparative Example D2)

A sealant film was produced and irradiated with electron beams in the same manner as in Example D1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Comparative Example D3)

A sealant film was produced and irradiated with electron beams in the same manner as in Example D1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Comparative Example D4)

A sealant film was produced and irradiated with electron beams in the same manner as in Example D1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed.

(Comparative Example D5)

A sealant film was produced and irradiated with electron beams in the same manner as in Example D1, except that the amount of the anti-blocking agent added was changed to 600 ppm.

<Evaluation of sealant film>

In the same manner as described above, the surface roughness of each sealant layer was measured, the reliability during sealing, the projections of the laminate layer, and the film formability were evaluated, and the puncture strength was further evaluated as described below.

(Puncture strength)

A test piece was cut out from a sealant film in a size of 50 mm × 50 mm. Using a Tensilo AD-7703 (manufactured by A&D Company, Limited, product name) and a dedicated semicircular needle having a diameter of 1.0 mm and a tip radius of 0.5 mm, the maximum force (N) until the needle penetrated was measured under the conditions of a test speed of 50 mm/min, a load cell of 100 N, and a load range of 10 N (10%), and this was evaluated as the puncture strength. At this time, when the strength was 1 time to less than 1.5 times that of a commercially available sealant film (Reference Example 1), it was evaluated as "O," and when it was less than that of a commercially available sealant film, it was evaluated as "×."

[Table 7]

| | | | Example D1 | Example D2 | Example D3 | Example D4 | Example D5 | Example D6 | Example D7 | Example D8 |
|---|---|---|---|---|---|---|---|---|---|---|
| Sealant film | Recycled material-containing layer | Material | Recycled material 1 | Recycled material 1 | Recycled material 1 | Recycled material 1 | Recycled material 2 | Recycled material 2 | Recycled material 2 | Recycled material 2 |
| | | Thickness ($\mu$m) | 30 | 80 | 90 | 90 | 80 | 90 | 95 | 90 |
| | Sealant layer | Material | LLDPE | LLDPE | LLDPE | LLDPE | LLDPE | LLDPE | LLDPE | LLDPE |
| | | Additive | Anti-blocking agent | Anti-blocking agent | Anti-blocking agent | Anti-blocking agent | Anti-blocking agent | Anti-blocking agent | Anti-blocking agent | Anti-blocking agent |
| | | Thickness ($\mu$m) | 70 | 20 | 10 | 10 | 20 | 10 | 5 | 10 |
| | | Arithmetic average surface roughness Ra ($\mu$m) | 0.5 | 2.0 | 5.0 | 2.0 | 0.5 | 2.0 | 5.0 | 2.0 |
| | | Maximum height H of projection ($\mu$m) | 2 | 7 | 10 | 6 | 2 | 8 | 10 | 6 |
| | | Ratio [W/H] | 1 | 10 | 20 | 10 | 1 | 12 | 20 | 10 |
| | Auxiliary layer | Material | - | - | - | - | - | - | - | - |
| | | Thickness ($\mu$m) | - | - | - | - | - | - | - | - |
| Evaluation | Reliability during heat sealing | | ⊙ | ○ | △ | ○ | ⊙ | ○ | ○ | ○ |
| | Film formability | | ○ | ○ | ○ | ○ | ○ | ○ | ○ | ○ |
| | Puncture strength | | ○ | ○ | ○ | ○ | ○ | ○ | ○ | ○ |

[Table 8]

| | | | Example D9 | Example D10 | Example D11 | Comparative Example D1 | Comparative Example D2 | Comparative Example D3 | Comparative Example D4 | Comparative Example D5 |
|---|---|---|---|---|---|---|---|---|---|---|
| Sealant film | Recycled material-containing layer | Material | Recycled material 1 (50 mass%) and LLDPE (50 mass%) | Recycled material 1 | Recycled material 1 | Recycled material 1 | Recycled material 1 | Recycled material 2 | Recycled material 2 | Recycled material 1 |
| | | Thickness (μm) | 80 | 80 | 80 | 30 | 95 | 80 | 98 | 30 |
| | Sealant layer | Material | LLDPE | PP | LLDPE | LLDPE | LLDPE | LLDPE | LLDPE | LLDPE |
| | | Additive | Anti-blocking agent | Anti-blocking agent | Anti-blocking agent | - | Anti-blocking agent | - | Anti-blocking agent | Anti-blocking agent |
| | | Thickness (μm) | 20 | 20 | 20 | 70 | 5 | 20 | 2 | 70 |
| | | Arithmetic average surface roughness Ra (μm) | 1.0 | 1.5 | 2.0 | 0.1 | 5.5 | 0.1 | 5.5 | 0.3 |
| | | Maximum height H of projection (μm) | 3 | 6 | 7 | 0.2 | 12 | 0.2 | 12 | 0.4 |
| | | Ratio [W/H] | 5 | 8 | 10 | 5 | 22 | 5 | 22 | 2 |
| | Auxiliary layer | Material | - | - | LLDPE | - | - | - | - | - |
| | | Thickness (μm) | - | - | 20 | - | - | - | - | - |
| Evaluation | | Reliability during heat sealing | ⊙ | ○ | ○ | ⊙ | × | ⊙ | × | ⊙ |
| | | Film formability | ○ | ○ | ○ | × | ○ | × | ○ | × |
| | | Puncture strength | ○ | ○ | ○ | × | × | × | × | × |

As shown in Tables 7 and 8, it was confirmed that the sealant films of Examples D1 to D11 contained a recycled material and had sufficient reliability during heat sealing, puncture strength, and film formability. Accordingly, according to the present invention, material recycling of a recycled material containing two or more kinds of resins can be realized in a sealant film or a packaging material.

<Production of sealant film E>

(Example E1)

Recycled material 1 was charged into a hopper for extruding a recycled material-containing layer, and inorganic particles 1 were further charged so that the content in the recycled material-containing layer was 10 mass%. LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 μm and a sealant layer having a thickness of 70 μm were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting.

(Example E2)

A sealant film was produced in the same manner as in Example E1, except that the extrusion amount of each layer was adjusted (the screw rotation speed during extrusion of the recycled material-containing layer was changed to 43 rpm) so that a recycled material-containing layer having a thickness of 80 μm and a sealant layer having a thickness of 20 μm were film-formed.

(Example E3)

A sealant film was produced in the same manner as in Example E1, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed.

(Example E4)

A sealant film was produced in the same manner as in Example E1, except that the molten resin was cooled under a pressure condition of 1.4 MPa using a nip roll (material: fluororesin) and a cooling roll having a matte concavo-convex shape (surface roughness Rz: 6 μm) formed by sandblasting, and that the extrusion amount of each layer was adjusted so that a recycled material-containing layer having a thickness of 90 μm and a sealant layer having a thickness of 10 μm were film-formed.

(Example E5)

A sealant film was produced in the same manner as in Example E1, except that recycled material 2 was charged instead of recycled material 1 into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 μm and a sealant layer having a thickness of 20 μm were film-formed.

(Example E6)

A sealant film was produced in the same manner as in Example E5, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed.

(Example E7)

A sealant film was produced in the same manner as in Example E5, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Example E8)

A sealant film was produced in the same manner as in Example E5, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed.

(Example E9)

A sealant film was produced in the same manner as in Example E2, except that recycled material 1 and LLDPE (manufactured by Prime Polymer Co., Ltd., product name "Evolue SP2040") were charged into a hopper for extruding a recycled material-containing layer at a weight ratio of 1:1.

(Example E10)

A sealant film was produced in the same manner as in Example E2, except that block PP (manufactured by Japan Polypropylene Corporation, product name "Novatec PP BC6DRF") to which 6000 ppm of an anti-blocking agent (manufactured by Prime Polymer Co., Ltd., product name "EAZ-20") had been added by dry blending was charged into a hopper for extruding a sealant layer.

(Example E11)

Recycled material 1 was charged into a hopper for extruding a recycled material-containing layer, and inorganic particles 1 were further charged so that the content in the recycled material-containing layer was 10 mass%. LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer, and LLDPE (manufactured by Prime Polymer Co., Ltd., product name "Evolue SP2040") was charged into a hopper for extruding an auxiliary layer. Using a single-screw multilayer extruder, an auxiliary layer having a thickness of 20 $\mu$m, a recycled material-containing layer having a thickness of 80 $\mu$m, and a sealant layer having a thickness of 20 $\mu$m were film-formed in this order by co-extrusion molding to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting, thereby producing a sealant film.

(Example E12)

A sealant film was produced in the same manner as in Example E11, except that recycled material 1 was charged into a hopper for extruding a recycled material-containing layer, and inorganic particles 1 were further charged so that the content in the recycled material-containing layer was 5 mass%, and that LLDPE (manufactured by Prime Polymer Co., Ltd., product name "Evolue SP2040") was charged into a hopper for extruding an auxiliary layer, and inorganic particles 1 were further charged so that the content in the auxiliary layer was 20 mass%.

(Example E13)

A sealant film was produced in the same manner as in Example E11, except that recycled material 1 alone was charged into a hopper for extruding a recycled material-containing layer, and that LLDPE (manufactured by Prime Polymer Co., Ltd., product name "Evolue SP2040") was charged into a hopper for extruding an auxiliary layer, and inorganic particles 1 were further charged so that the content in the auxiliary layer was 40 mass%.

(Example E14)

A sealant film was produced in the same manner as in Example E2, except that the amount of inorganic particles 1 charged was adjusted so that the content in the recycled material-containing layer was 5 mass%.

(Example E15)

A sealant film was produced in the same manner as in Example E2, except that the amount of inorganic particles 1 charged was adjusted so that the content in the recycled material-containing layer was 7 mass%.

(Example E16)

A sealant film was produced in the same manner as in Example E2, except that the amount of inorganic particles 1 charged was adjusted so that the content in the recycled material-containing layer was 20 mass%.

(Example E17)

A sealant film was produced in the same manner as in Example E2, except that the amount of inorganic particles 1 charged was adjusted so that the content in the recycled material-containing layer was 23 mass%.

(Comparative Example E1)

A sealant film was produced in the same manner as in Example E1, except that no anti-blocking agent was added to the sealant layer.

(Comparative Example E2)

A sealant film was produced in the same manner as in Example E1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed.

(Comparative Example E3)

A sealant film was produced in the same manner as in Example E1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed.

(Comparative Example E4)

A sealant film was produced in the same manner as in Example E1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed.

(Comparative Example E5)

A sealant film was produced in the same manner as in Example E1, except that the amount of the anti-blocking agent added was changed to 600 ppm.

(Comparative Example E6)

A sealant film was produced in the same manner as in Example E1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5

μm were film-formed, and that no inorganic particles 1 were charged into a hopper for extruding a recycled material-containing layer.

<Evaluation of sealant film>

In the same manner as described above, the surface roughness of each sealant layer was measured, the reliability during sealing, the projections of the laminate layer, and the film formability were evaluated, and the appearance (opacity) was further evaluated as described below.

(Appearance: Opacity)

The opacity of each sealant film obtained in each example was evaluated using a portable transmission densitometer (model No. 341C) manufactured by X-Rite, Inc. The measured transmission density was evaluated as "×" for less than 0.20, "△" for 0.20 to less than 0.40, "○" for 0.40 to less than 0.50, and "⊙" for 0.50 or more.

[Table 9]

| | | | Example E1 | Example E2 | Example E3 | Example E4 | Example E5 | Example E6 |
|---|---|---|---|---|---|---|---|---|
| Sealant film | Recycled material-containing layer | Material | Recycled material 1 (90 mass%) and inorganic particles 1 (10 mass%) | Recycled material 1 (90 mass%) and inorganic particles 1 (10 mass%) | Recycled material 1 (90 mass%) and inorganic particles 1 (10 mass%) | Recycled material 1 (90 mass%) and inorganic particles 1 (10 mass%) | Recycled material 2 (90 mass%) and inorganic particles 1 (10 mass%) | Recycled material 2 (90 mass%) and inorganic particles 1 (10 mass%) |
| | | Thickness (μm) | 30 | 80 | 90 | 90 | 80 | 90 |
| | Sealant layer | Material | LLDPE | LLDPE | LLDPE | LLDPE | LLDPE | LLDPE |
| | | Additive | Anti-blocking agent | Anti-blocking agent | Anti-blocking agent | Anti-blocking agent | Anti-blocking agent | Anti-blocking agent |
| | | Thickness (μm) | 70 | 20 | 10 | 10 | 20 | 10 |
| | | Arithmetic average surface roughness Ra (μm) | 0.5 | 2.0 | 5.0 | 2.0 | 0.5 | 2.0 |
| | | Maximum height H of projection (μm) | 2 | 7 | 10 | 6 | 2 | 8 |
| | | Ratio [W/H] | 1 | 10 | 20 | 10 | 1 | 12 |
| | Auxiliary layer | Material | - | - | - | - | - | - |
| | | Thickness (μm) | - | - | - | - | - | - |
| Evaluation | Reliability during heat sealing | | ⊙ | ○ | △ | ○ | ⊙ | ○ |
| | Film formability | | ○ | ○ | ○ | ○ | ○ | ○ |
| | Appearance: Opacity | | ⊙ | ⊙ | ⊙ | ⊙ | ⊙ | ⊙ |

[Table 10]

| | | | Example E7 | Example E8 | Example E9 | Example E10 | Example E11 | Example E12 |
|---|---|---|---|---|---|---|---|---|
| Sealant film | Recycled material-containing layer | Material | Recycled material 2 (90 mass%) and inorganic particles 1 (10 mass%) | Recycled material 2 (90 mass%) and inorganic particles 1 (10 mass%) | Recycled material 1 (45 mass%), LLDPE (45 mass%), and inorganic particles 1 (10 mass%) | Recycled material 1 (90 mass%) and inorganic particles 1 (10 mass%) | Recycled material 1 (90 mass%) and inorganic particles 1 (10 mass%) | Recycled material 1 (95 mass%) and inorganic particles 1 (5 mass%) |
| | | Thickness (μm) | 95 | 90 | 80 | 80 | 80 | 80 |
| | Sealant layer | Material | LLDPE | LLDPE | LLDPE | PP | LLDPE | LLDPE |
| | | Additive | Anti-blocking agent | Anti-blocking agent | Anti-blocking agent | Anti-blocking agent | Anti-blocking agent | Anti-blocking agent |
| | | Thickness (μm) | 5 | 10 | 20 | 20 | 20 | 20 |
| | | Arithmetic average surface roughness Ra (μm) | 5.0 | 2.0 | 1.0 | 1.5 | 2.0 | 2.0 |
| | | Maximum height H of projection (μm) | 10 | 6 | 3 | 6 | 7 | 7 |
| | | Ratio [W/H] | 20 | 10 | 5 | 8 | 10 | 10 |
| | Auxiliary layer | Material | - | - | - | - | LLDPE | LLDPE (80 mass%) and inorganic particles 1 (20 mass%) |
| | | Thickness (μm) | - | - | - | - | 20 | 20 |
| Evaluation | | Reliability during heat sealing | ○ | ○ | ⊙ | ○ | ⊙ | ⊙ |
| | | Film formability | ○ | ○ | ○ | ○ | ○ | ○ |
| | | Appearance: Opacity | O | ⊙ | ⊙ | ⊙ | ⊙ | O |

[Table 11]

| | | | Example E13 | Example E14 | Example E15 | Example E16 | Example E17 |
|---|---|---|---|---|---|---|---|
| Sealant film | Recycled material-containing layer | Material | Recycled material 1 | Recycled material 1 (95 mass%) and inorganic particles 1 (5 mass%) | **Recycled material 1 (93 mass%)** and inorganic particles 1 (7 mass%) | Recycled material 1 (80 mass%) and inorganic particles 1 (20 mass%) | Recycled material 1 (77 mass%) and inorganic particles 1 (23 mass%) |
| | | Thickness (μm) | 80 | 80 | 80 | 80 | 80 |
| | Sealant layer | Material | LLDPE | LLDPE | LLDPE | LLDPE | LLDPE |
| | | Additive | Anti-blocking agent | Anti-blocking agent | Anti-blocking agent | Anti-blocking agent | Anti-blocking agent |
| | | Thickness (μm) | 20 | 20 | 20 | 20 | 20 |
| | | Arithmetic average surface roughness Ra (μm) | 2.0 | 2.0 | 2.0 | 2.0 | 2.0 |
| | | Maximum height H of projection (μm) | 7 | 7 | 7 | 7 | 7 |
| | | Ratio [W/H] | 10 | 10 | 10 | 10 | 10 |
| | Auxiliary layer | Material | LLDPE (60 mass%) and inorganic particles 1 (40 mass%) | - | - | - | - |
| | | Thickness (μm) | 20 | - | - | - | - |
| Evaluation | Reliability during heat sealing | | ⊙ | ○ | ○ | ○ | ○ |
| | Film formability | | ○ | ○ | ○ | ○ | ○ |
| | | Appearance: Opacity | ⊙ | △ | ○ | ⊙ | ⊙ |

[Table 12]

| | | | Comparative Example E1 | Comparative Example E2 | Comparative Example E3 | Comparative Example E4 | Comparative Example E5 | Comparative Example E6 |
|---|---|---|---|---|---|---|---|---|
| Sealant film | Recycled material-containing layer | Material | Recycled material 1 (90 mass%) and inorganic particles 1 (10 mass%) | Recycled material 1 (90 mass%) and inorganic particles 1 (10 mass%) | Recycled material 2 (90 mass%) and inorganic particles 1 (10 mass%) | Recycled material 2 (90 mass%) and inorganic particles 1 (10 mass%) | Recycled material 1 (90 mass%) and inorganic particles 1 (10 mass%) | Recycled material 1 |
| | | Thickness (μm) | 30 | 95 | 80 | 98 | 30 | 95 |
| | Sealant layer | Material | LLDPE | LLDPE | LLDPE | LLDPE | LLDPE | LLDPE |
| | | Additive | - | Anti-blocking agent | - | Anti-blocking agent | Anti-blocking agent | Anti-blocking agent |
| | | Thickness (μm) | 70 | 5 | 20 | 2 | 70 | 5 |
| | | Arithmetic average surface roughness Ra (μm) | 0.1 | 5.5 | 0.1 | 5.5 | 0.3 | 5.5 |
| | | Maximum height H of projection (μm) | 0.2 | 12 | 0.2 | 12 | 0.4 | 12 |
| | | Ratio [W/H] | 5 | 22 | 5 | 22 | 2 | 22 |
| | Auxiliary layer | Material | - | - | - | - | - | - |
| | | Thickness (μm) | - | - | - | - | - | - |
| Evaluation | | Reliability during heat sealing | ○ | × | ○ | × | ○ | × |
| | | Film formability | × | ○ | × | ○ | × | ○ |
| | | Appearance: Opacity | ⊙ | ⊙ | ⊙ | ⊙ | ⊙ | × |

As shown in Tables 9 and **11,** it was confirmed that the sealant films of Examples E1 to E17 contained a recycled material and had sufficient reliability during heat sealing and film formability. **In** addition, it was confirmed that the sealant films of Examples E1 to E15 were imparted with sufficient concealability by blending inorganic particles. Accordingly, according to the present invention, material recycling of a recycled material containing two or more kinds of resins can be realized in a sealant film or a packaging material.

<Preparation of sealant film and laminate F>

(Example F1)

Recycled material 1 was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 $\mu$m and a sealant layer having a thickness of 70 $\mu$m were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting.

Next, on the recycled material-containing layer of the above-obtained sealant film, a vapor deposition layer (aluminum vapor deposition layer) composed of aluminum having a thickness of 40 nm was formed using a vacuum vapor deposition device of an electron beam heating method, thereby producing a laminate.

(Example F2)

A sealant film was produced in the same manner as in Example F1, except that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, an aluminum vapor deposition layer was formed on this sealant film in the same manner as in Example F1 to prepare a laminate.

(Example F3)

A sealant film was produced in the same manner as in Example F1, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed. Next, an aluminum vapor deposition layer was formed on this sealant film in the same manner as in Example F1 to prepare a laminate.

(Example F4)

A sealant film was produced in the same manner as in Example F1, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted so that a recycled material-containing layer having a thickness of 90 $\mu$m and a sealant layer having a thickness of 10 $\mu$m were film-formed. Next, an aluminum vapor deposition layer was formed on this sealant film in the same manner as in Example F1 to prepare a laminate.

(Example F5)

A sealant film was produced in the same manner as in Example F1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, an aluminum vapor deposition layer was formed on this sealant film in the same manner as in Example F1 to prepare a laminate.

(Example F6)

A sealant film was produced in the same manner as in Example F5, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed. Next, an aluminum vapor deposition layer was formed on this sealant film in the same manner as in Example F1 to prepare a laminate.

(Example F7)

A sealant film was produced in the same manner as in Example F5, except that the extrusion amount of each layer was adjusted (the screw rotation speed during extrusion of the recycled material-containing layer was changed to 51 rpm) so that a recycled material-containing layer having a thickness of 95 μm and a sealant layer having a thickness of 5 μm were film-formed. Next, an aluminum vapor deposition layer was formed on this sealant film in the same manner as in Example F1 to prepare a laminate.

(Example F8)

A sealant film was produced in the same manner as in Example F5, except that the molten resin was cooled under a pressure condition of 1.4 MPa using a nip roll (material: fluororesin) and a cooling roll having a matte concavo-convex shape (surface roughness Rz: 6 μm) formed by sandblasting, and that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed. Next, an aluminum vapor deposition layer was formed on this sealant film in the same manner as in Example F1 to prepare a laminate.

(Example F9)

A sealant film was produced in the same manner as in Example F2, except that recycled material 1 and LLDPE (manufactured by Prime Polymer Co., Ltd., product name "Evolue SP2040") were charged into a hopper for extruding a recycled material-containing layer at a weight ratio of 1:1.
Next, on the auxiliary layer of the above-obtained sealant film, a transparent vapor deposition layer (aluminum vapor deposition layer) composed of aluminum having a thickness of 40 nm was formed using a vacuum vapor deposition device of an electron beam heating method, thereby producing a laminate.

(Example F10)

A sealant film was produced in the same manner as in Example F2, except that block PP (manufactured by Japan Polypropylene Corporation, product name "Novatec PP BC6DRF") to which 6000 ppm of an anti-blocking agent (manufactured by Prime Polymer Co., Ltd., product name "EAZ-20") had been added by dry blending was charged into a hopper for extruding a sealant layer.
Next, on the auxiliary layer of the above-obtained sealant film, a transparent vapor deposition layer (aluminum vapor deposition layer) composed of aluminum having a thickness of 40 nm was formed using a vacuum vapor deposition device of an electron beam heating method, thereby producing a laminate.

(Example F11)

Recycled material 1 alone was charged into a hopper for extruding a recycled material-containing layer, and LLDPE (manufactured by Prime Polymer Co., Ltd., product name "Evolue SP2040") to which 6000 ppm of an anti-blocking agent (manufactured by Prime Polymer Co., Ltd., product name "EAZ-20") had been added by dry blending was charged into a hopper for extruding a sealant layer, and LLDPE (manufactured by Prime Polymer Co., Ltd., product name "Evolue SP2040") was charged into a hopper for extruding an auxiliary layer. Using a single-screw multilayer extruder, an auxiliary layer having a thickness of 20 μm, a recycled material-containing layer having a thickness of 80 μm, and a sealant layer having a thickness of 20 μm were film-formed in this order by co-extrusion molding to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting.

Next, on the auxiliary layer of the above-obtained sealant film, a transparent vapor deposition layer (aluminum vapor deposition layer) composed of aluminum having a thickness of 40 nm was formed using a vacuum vapor deposition device of an electron beam heating method, thereby producing a laminate.

(Example F12)

A sealant film was produced in the same manner as in Example F11, except that EVOH (manufactured by Kuraray Co., Ltd., product name "EVAL L171B") was charged instead of LLDPE into a hopper for extruding an auxiliary layer.

Next, on the auxiliary layer of the above-obtained sealant film, a transparent vapor deposition layer (aluminum vapor deposition layer) composed of aluminum having a thickness of 40 nm was formed using a vacuum vapor deposition device of an electron beam heating method, thereby producing a laminate.

(Comparative Example F1)

A sealant film was produced in the same manner as in Example 1, except that no anti-blocking agent was added to the sealant layer. Next, an aluminum vapor deposition layer was formed on this sealant film in the same manner as in Example F1 to prepare a laminate.

(Comparative Example F2)

A sealant film was produced in the same manner as in Example F1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed. Next, an aluminum vapor deposition layer was formed on this sealant film in the same manner as in Example F1 to prepare a laminate.

(Comparative Example F3)

A sealant film was produced in the same manner as in Example F1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, an aluminum vapor deposition layer was formed on this sealant film in the same manner as in Example F1 to prepare a laminate.

(Comparative Example F4)

A sealant film was produced in the same manner as in Example F1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed. Next, an aluminum vapor deposition layer was formed on this sealant film in the same manner as in Example F1 to prepare a laminate.

(Comparative Example F5)

A sealant film was produced in the same manner as in Example F1, except that the amount of the anti-blocking agent added was changed to 600 ppm. Next, an aluminum vapor deposition layer was formed on this sealant film in the same manner as in Example F1 to prepare a laminate.

<Evaluation of sealant film>

In the same manner as described above, the surface roughness of each sealant layer was measured, and the reliability during sealing, the projections of the laminate layer, and the film formability were evaluated.

<Evaluation of laminate>

The gas barrier properties of the laminates were evaluated as follows.

(Gas barrier properties)

The water vapor transmission rate (WVTR) of the laminates obtained in each example and comparative example was evaluated using a water vapor transmission rate measuring device (product name: PERMATRAN 3/34G, measurement conditions: 40°C-90% RH; unit: $g/(m^2 \cdot day)$) manufactured by MOCON, Inc. The measurement method conformed to JIS K-7129-2:2019. The water vapor barrier properties were evaluated as "⊙" for less than 3 $g/(m^2 \cdot day)$, "○" for 3 $g/(m^2 \cdot day)$ to 5 $g/(m^2 \cdot day)$, and "×" for greater than 5 $g/(m^2 \cdot day)$.

[Table 13]

| | | | | Example F1 | Example F2 | Example F3 | Example F4 | Example F5 | Example F6 |
|---|---|---|---|---|---|---|---|---|---|
| Laminate | Sealant film | Recycled material-containing layer | Material | Recycled material 1 | Recycled material 1 | Recycled material 1 | Recycled material 1 | Recycled material 2 | Recycled material 2 |
| | | | Thickness (μm) | 30 | 80 | 90 | 90 | 80 | 90 |
| | | Sealant layer | Material | LLDPE | LLDPE | LLDPE | LLDPE | LLDPE | LLDPE |
| | | | Additive | Anti-blocking agent | Anti-blocking agent | Anti-blocking agent | Anti-blocking agent | Anti-blocking agent | Anti-blocking agent |
| | | | Thickness (μm) | 70 | 20 | 10 | 10 | 20 | 10 |
| | | | Arithmetic average surface roughness Ra (μm) | 0.5 | 2.0 | 5.0 | 2.0 | 0.5 | 2.0 |
| | | | Maximum height H of projection (μm) | 2 | 7 | 10 | 6 | 2 | 8 |
| | | | Ratio [W/H] | 1 | 10 | 20 | 10 | 1 | 12 |
| | | Auxiliary layer | Material | - | - | - | - | - | - |
| | | | Thickness (μm) | - | - | - | - | - | - |
| | Gas barrier layer | | Material | Aluminum vapor deposition | Aluminum vapor deposition | Aluminum vapor deposition | Aluminum vapor deposition | Aluminum vapor deposition | Aluminum vapor deposition |
| Evaluation | | | Reliability during heat sealing | ⊙ | ○ | △ | ○ | ⊙ | ○ |
| | | | Film formability | ○ | ○ | ○ | ○ | ○ | ○ |
| | | | Gas barrier properties | ⊙ | ○ | △ | △ | ○ | △ |

[Table 14]

| | | | | Example F7 | Example F8 | Example F9 | Example F10 | Example F11 | Example F12 |
|---|---|---|---|---|---|---|---|---|---|
| Laminate | Sealant film | Recycled material-containing layer | Material | Recycled material 2 | Recycled material 2 | Recycled material 1 (50 mass%) and LLDPE (50 mass%) | Recycled material 1 | Recycled material 1 | Recycled material 1 |
| | | | Thickness (μm) | 95 | 90 | 80 | 80 | 80 | 80 |
| | | Sealant layer | Material | LLDPE | LLDPE | LLDPE | PP | LLDPE | LLDPE |
| | | | Additive | Anti-blocking agent | Anti-blocking agent | Anti-blocking agent | Anti-blocking agent | Anti-blocking agent | Anti-blocking agent |
| | | | Thickness (μm) | 5 | 10 | 20 | 20 | 20 | 20 |
| | | | Arithmetic average surface roughness Ra (μm) | 5.0 | 2.0 | 1.0 | 1.5 | 2.0 | 2.0 |
| | | | Maximum height H of projection (μm) | 10 | 6 | 3 | 6 | 7 | 7 |
| | | | Ratio [W/H] | 20 | 10 | 5 | 8 | 10 | 10 |
| | | Auxiliary layer | Material | - | - | - | - | LLDPE | EVOH |
| | | | Thickness (μm) | - | - | - | - | 20 | 20 |
| | Gas barrier layer | | Material | Aluminum vapor deposition | Aluminum vapor deposition | Aluminum vapor deposition | Aluminum vapor deposition | Aluminum vapor deposition | Aluminum vapor deposition |
| Evaluation | | | Reliability during heat sealing | ○ | ○ | ⊙ | ○ | ○ | ○ |
| | | | Film formability | ○ | ○ | ○ | ○ | ○ | ○ |
| | | | Gas barrier properties | △ | △ | ○ | ○ | ○ | ⊙ |

[Table 15]

| Laminate | | | | Comparative Example F1 | Comparative Example F2 | Comparative Example F3 | Comparative Example F4 | Comparative Example F5 |
|---|---|---|---|---|---|---|---|---|
| Laminate | Sealant film | Recycled material-containing layer | Material | Recycled material 1 | Recycled material 1 | Recycled material 2 | Recycled material 2 | Recycled material 1 |
| | | | Thickness (μm) | 30 | 95 | 80 | 98 | 30 |
| | | Sealant layer | Material | LLDPE | LLDPE | LLDPE | LLDPE | LLDPE |
| | | | Additive | - | Anti-blocking agent | - | Anti-blocking agent | Anti-blocking agent |
| | | | Thickness (μm) | 70 | 5 | 20 | 2 | 70 |
| | | | Arithmetic average surface roughness Ra (μm) | 0.1 | 5.5 | 0.1 | 5.5 | 0.3 |
| | | | Maximum height H of projection (μm) | 0.2 | 12 | 0.2 | 12 | 0.4 |
| | | | Ratio [W/H] | 5 | 22 | 5 | 22 | 2 |
| | | Auxiliary layer | Material | - | - | - | - | - |
| | | | Thickness (μm) | - | - | - | - | - |
| | Adhesive layer | | Material | Solvent-free adhesive | Solvent-free adhesive | Solvent-free adhesive | Solvent-free adhesive | Solvent-free adhesive |
| | Base material film | | Material | Silica vapor deposition PET film | Silica vapor deposition PET film | Silica vapor deposition PET film | Silica vapor deposition PET film | Silica vapor deposition PET film |
| Evaluation | | Reliability during heat sealing | | ⊙ | × | ⊙ | × | ⊙ |
| | | Film formability | | × | ○ | × | ○ | × |
| | | Gas barrier properties | | ⊙ | × | ○ | × | ⊙ |

EP 4 714 654 A1

52

As shown in Tables 13 and 14, it was confirmed that the sealant films and laminates of Examples F1 to F12 contained a recycled material and had sufficient reliability during heat sealing and film formability, and also had excellent gas barrier properties. Accordingly, according to the present invention, material recycling of a recycled material containing two or more kinds of resins can be realized in a laminate or a packaging material.

<Preparation of sealant film and laminate G>

(Example G1)

Recycled material 1 was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer. Using a single-screw multilayer extruder, a recycled material-containing layer having a thickness of 30 $\mu$m and a sealant layer having a thickness of 70 $\mu$m were film-formed by co-extrusion molding to produce a sealant film. The screw rotation speed during extrusion of the recycled material-containing layer was set to 16 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 $\mu$m) formed by sandblasting.

Next, on a silica vapor deposition PET film (manufactured by TOPPAN Holdings Inc., product name "GL-RD," PET film thickness: 12 $\mu$m, silica vapor deposition), a solvent-free adhesive TSN-4864A/TSN-4864B3 "" (manufactured by Toyo-Morton, Ltd.) (a mixture obtained by mixing a main agent "TSN-4864A" and a curing agent "TSN-4864B3" at a weight ratio of 1:1) was applied with a roll coater so that the coating amount was 2 g/m$^2$, and the above sealant film was bonded to the recycled material-containing layer of the above sealant film to produce a laminate.

(Example G2)

A sealant film was produced in the same manner as in Example G1, except that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, a laminate was produced in the same manner as in Example G1, except that this sealant film was used.

(Example G3)

A sealant film was produced in the same manner as in Example G1, except that the extrusion amount of each layer was adjusted (the screw rotation speed during extrusion of the recycled material-containing layer was changed to 48 rpm) so that a recycled material-containing layer having a thickness of 90 $\mu$m and a sealant layer having a thickness of 10 $\mu$m were film-formed. Next, a laminate was produced in the same manner as in Example G1, except that this sealant film was used.

(Example G4)

A sealant film was produced in the same manner as in Example G1, except that the molten resin was cooled under a pressure condition of 1.4 MPa using a nip roll (material: fluororesin) and a cooling roll having a matte concavo-convex shape (surface roughness Rz: 6 $\mu$m) formed by sandblasting, and that the extrusion amount of each layer was adjusted so that a recycled material-containing layer having a thickness of 90 $\mu$m and a sealant layer having a thickness of 10 $\mu$m were film-formed. Next, a laminate was produced in the same manner as in Example G1, except that this sealant film was used.

(Example G5)

A sealant film was produced in the same manner as in Example G1, except that recycled material 2 was charged into a hopper for extruding a recycled material-containing layer, and that the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, a laminate was produced in the same manner as in Example G1, except that this sealant film was used.

(Example G6)

A sealant film was produced in the same manner as in Example G5, except that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed. Next, a laminate was produced in the same manner as in Example G1, except that this sealant film was used.

(Example G7)

A sealant film was produced in the same manner as in Example G5, except that the extrusion amount of each layer was adjusted (the screw rotation speed during extrusion of the recycled material-containing layer was changed to 51 rpm) so that a recycled material-containing layer having a thickness of 95 μm and a sealant layer having a thickness of 5 μm were film-formed. Next, a laminate was produced in the same manner as in Example G1, except that this sealant film was used.

(Example G8)

A sealant film was produced in the same manner as in Example G5, except that the molten resin was cooled under a pressure condition of 1.4 MPa using a nip roll (material: fluororesin) and a cooling roll having a matte concavo-convex shape (surface roughness Rz: 6 μm) formed by sandblasting, and that the extrusion amount of each layer was adjusted (the screw rotation speed during extrusion of the recycled material-containing layer was changed to 48 rpm) so that a recycled material-containing layer having a thickness of 90 μm and a sealant layer having a thickness of 10 μm were film-formed. Next, a laminate was produced in the same manner as in Example G1, except that this sealant film was used.

(Example G9)

Recycled material 1 was charged into a hopper for extruding a recycled material-containing layer, and LLDPE (manufactured by Prime Polymer Co., Ltd., product name "Evolue SP1540") to which 6000 ppm of an anti-blocking agent (manufactured by Prime Polymer Co., Ltd., product name "EAZ-20") had been added by dry blending was charged into a hopper for extruding a sealant layer, and LLDPE (manufactured by Prime Polymer Co., Ltd., product name "Evolue SP2040") was charged into a hopper for extruding an auxiliary layer. Using a single-screw multilayer extruder, an auxiliary layer having a thickness of 20 μm, a recycled material-containing layer having a thickness of 80 μm, and a sealant layer having a thickness of 20 μm were film-formed by co-extrusion molding to produce a sealant film. The screw rotation speed during extrusion of the recycled material-containing layer was set to 43 rpm, narrowing of the flow channel before the T-die was avoided as much as possible to create a mechanism that was less susceptible to tensile stress, and the molten resin was cooled with an air knife and a cooling roll having a matte concavo-convex shape (surface roughness Rz: 6 μm) formed by sandblasting. Next, a laminate was produced in the same manner as in Example G1, except that this sealant film was used.

(Example G10)

A sealant film was produced in the same manner as in Example G2, except that recycled material 1 and LLDPE (manufactured by Prime Polymer Co., Ltd., product name "Evolue SP2040") were charged into a hopper for extruding a recycled material-containing layer at a weight ratio of 1:1. Next, a laminate was produced in the same manner as in Example G1, except that this sealant film was used.

(Example G11)

A sealant film was produced in the same manner as in Example G2, except that block PP (manufactured by Japan Polypropylene Corporation, product name "Novatec PP BC6DRF") to which 6000 ppm of an anti-blocking agent (manufactured by Prime Polymer Co., Ltd., product name "EAZ-20") had been added by dry blending was charged into a hopper for extruding a sealant layer. Next, a laminate was produced in the same manner as in Example G1, except that this sealant film was used.

(Example G12)

A sealant film was produced in the same manner as in Example G1. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G13)

A sealant film was produced in the same manner as in Example G2. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G14)

A sealant film was produced in the same manner as in Example G3. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G15)

A sealant film was produced in the same manner as in Example G4. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G16)

A sealant film was produced in the same manner as in Example G5. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G17)

A sealant film was produced in the same manner as in Example G6. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G18)

A sealant film was produced in the same manner as in Example G7. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G19)

A sealant film was produced in the same manner as in Example G8. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Example G20)

A sealant film was produced in the same manner as in Example G9. Next, using this sealant film, a laminate was produced in the same manner as in Example G1, except that a mixture obtained by mixing a solvent-based adhesive containing an organic solvent "Takelac A626 (manufactured by Mitsui Chemicals, Inc.)" and "Takenate A-50 (manufactured by Mitsui Chemicals, Inc.)" at a weight ratio of 8:1 was used instead of the solvent-free adhesive.

(Comparative Example G1)

A sealant film was produced in the same manner as in Example G1, except that no anti-blocking agent was added to the sealant layer. Next, a laminate was produced in the same manner as in Example G1, except that this sealant film was used.

(Comparative Example G2)

A sealant film was produced in the same manner as in Example G1, except that the extrusion amount of each layer was adjusted (the screw rotation speed during extrusion of the recycled material-containing layer was changed to 51 rpm) so that a recycled material-containing layer having a thickness of 95 $\mu$m and a sealant layer having a thickness of 5 $\mu$m were film-formed. Next, a laminate was produced in the same manner as in Example G1, except that this sealant film was used.

(Comparative Example G3)

A sealant film was produced in the same manner as in Example G1, except that recycled material 2 was charged into a hopper for extruding a recycled material-containing layer, no anti-blocking agent was added to the sealant layer, and the extrusion amount of each layer was adjusted (the screw rotation speed during extrusion of the recycled material-containing layer was changed to 43 rpm) so that a recycled material-containing layer having a thickness of 80 $\mu$m and a sealant layer having a thickness of 20 $\mu$m were film-formed. Next, a laminate was produced in the same manner as in Example G1, except that this sealant film was used.

(Comparative Example G4)

A sealant film was produced in the same manner as in Example G1, except that recycled material 2 was charged into a hopper for extruding a recycled material-containing layer, and that the extrusion amount of each layer was adjusted (the screw rotation speed during extrusion of the recycled material-containing layer was changed to 52 rpm) so that a recycled material-containing layer having a thickness of 98 $\mu$m and a sealant layer having a thickness of 2 $\mu$m were film-formed. Next, a laminate was produced in the same manner as in Example G1, except that this sealant film was used.

(Comparative Example G5)

A sealant film was produced in the same manner as in Example G1, except that the amount of the anti-blocking agent added was changed to 600 ppm. Next, a laminate was produced in the same manner as in Example G1, except that this sealant film was used.

<Evaluation of sealant film>

In the same manner as described above, the surface roughness of each sealant layer was measured, and the reliability during sealing, the projections of the laminate layer, and the film formability were evaluated.

<Appearance evaluation of laminate (packaging material)>

The appearance of laminates (packaging materials) produced in each of the examples and comparative examples was evaluated for bubbles as follows.

(Appearance: Bubbles)

Each laminate obtained in each example and comparative example was cut into a 100 mm square and evaluated based on the following determination criteria.

[Determination criteria] ⊙: No bubbles with a diameter of 0.1 mm or more were present.
O: Bubbles with a diameter of 0.1 mm to less than 0.5 mm were present.
△: Bubbles with a diameter of 0.5 mm to less than 1 mm were present.
✕: Bubbles with a diameter of 1 mm or more were present.

[Table 16]

| | | | Example G1 | Example G2 | Example G3 | Example G4 | Example G5 | Example G6 |
|---|---|---|---|---|---|---|---|---|
| Laminate | Sealant film | Recycled material-containing layer | Material | Recycled material 1 | Recycled material 1 | Recycled material 1 | Recycled material 1 | Recycled material 2 | Recycled material 2 |
| | | | Thickness (μm) | 30 | 80 | 90 | 90 | 80 | 90 |
| | | Sealant layer | Material | LLDPE | LLDPE | LLDPE | LLDPE | LLDPE | LLDPE |
| | | | Additive | Anti-blocking agent | Anti-blocking agent | Anti-blocking agent | Anti-blocking agent | Anti-blocking agent | Anti-blocking agent |
| | | | Thickness (μm) | 70 | 20 | 10 | 10 | 20 | 10 |
| | | | Arithmetic average surface roughness Ra (μm) | 0.5 | 2.0 | 5.0 | 2.0 | 0.5 | 2.0 |
| | | | Maximum height H of projection (μm) | 2 | 7 | 10 | 6 | 2 | 8 |
| | | | Ratio [W/H] | 1 | 10 | 20 | 10 | 1 | 12 |
| | | Auxiliary layer | Material | - | - | - | - | - | - |
| | | | Thickness (μm) | - | - | - | - | - | - |
| | Adhesive layer | | Material | Solvent-free adhesive | Solvent-free adhesive | Solvent-free adhesive | Solvent-free adhesive | Solvent-free adhesive | Solvent-free adhesive |
| | Base material film | | Material | Silica vapor deposition PET film | Silica vapor deposition PET film | Silica vapor deposition PET film | Silica vapor deposition PET film | Silica vapor deposition PET film | Silica vapor deposition PET film |
| Evaluation | | | Reliability during heat sealing | ⊙ | ○ | △ | ○ | ○ | ○ |
| | | | Film formability | ○ | ○ | ○ | ○ | ○ | ○ |
| | | | Appearance: Bubbles | ⊙ | ○ | △ | △ | ○ | △ |

[Table 17]

| | | | | Example G7 | Example G8 | Example G9 | Example G10 | Example G11 | Example G12 |
|---|---|---|---|---|---|---|---|---|---|
| Laminate | Sealant film | Recycled material-containing layer | Material | Recycled material 2 | Recycled material 2 | Recycled material 1 | Recycled material 1 (50 mass%) and LLDPE (50 mass%) | Recycled material 1 | Recycled material 1 |
| | | | Thickness (μm) | 95 | 90 | 80 | 80 | 80 | 30 |
| | | Sealant layer | Material | LLDPE | LLDPE | LLDPE | LLDPE | PP | LLDPE |
| | | | Additive | Anti-blocking agent | Anti-blocking agent | Anti-blocking agent | Anti-blocking agent | Anti-blocking agent | Anti-blocking agent |
| | | | Thickness (μm) | 5 | 10 | 20 | 20 | 20 | 70 |
| | | | Arithmetic average surface roughness Ra (μm) | 5.0 | 2.0 | 2.0 | 1.0 | 1.5 | 0.5 |
| | | | Maximum height H of projection (μm) | 10 | 6 | 7 | 3 | 6 | 2 |
| | | | Ratio [W/H] | 20 | 10 | 10 | 5 | 8 | 1 |
| | | Auxiliary layer | Material | - | - | LLDPE | - | - | - |
| | | | Thickness (μm) | - | - | 20 | - | - | - |
| | Adhesive layer | | Material | Solvent-free adhesive | Solvent-free adhesive | Solvent-free adhesive | Solvent-free adhesive | Solvent-free adhesive | Solvent-based adhesive |
| | Base material film | | Material | Silica vapor deposition PET film | Silica vapor deposition PET film | Silica vapor deposition PET film | Silica vapor deposition PET film | Silica vapor deposition PET film | Silica vapor deposition PET film |
| Evaluation | | Reliability during heat sealing | | ○ | ○ | ○ | O | ○ | ⊙ |
| | | Film formability | | ○ | ○ | ○ | ○ | ○ | ○ |
| | | Appearance: Bubbles | | △ | ○ | ○ | O | ○ | ○ |

EP 4 714 654 A1

58

[Table 18]

| | | | | Example G13 | Example G14 | Example G15 | Example G16 | Example G17 | Example G18 |
|---|---|---|---|---|---|---|---|---|---|
| Laminate | Sealant film | Recycled material-containing layer | Material | Recycled material 1 | Recycled material 1 | Recycled material 1 | Recycled material 2 | Recycled material 2 | Recycled material 2 |
| | | | Thickness (μm) | 80 | 90 | 90 | 80 | 90 | 95 |
| | | Sealant layer | Material | LLDPE | LLDPE | LLDPE | LLDPE | LLDPE | LLDPE |
| | | | Additive | Anti-blocking agent | Anti-blocking agent | Anti-blocking agent | Anti-blocking agent | Anti-blocking agent | Anti-blocking agent |
| | | | Thickness (μm) | 20 | 10 | 10 | 20 | 10 | 5 |
| | | | Arithmetic average surface roughness Ra (μm) | 2.0 | 5.0 | 2.0 | 0.5 | 2.0 | 5.0 |
| | | | Maximum height H of projection (μm) | 7 | 10 | 6 | 2 | 8 | 10 |
| | | | Ratio [W/H] | 10 | 20 | 10 | 1 | 12 | 20 |
| | | Auxiliary layer | Material | - | - | - | - | - | - |
| | | | Thickness (μm) | - | - | - | - | - | - |
| | Adhesive layer | | Material | Solvent-based adhesive | Solvent-based adhesive | Solvent-based adhesive | Solvent-based adhesive | Solvent-based adhesive | Solvent-based adhesive |
| | Base material film | | Material | Silica vapor deposition PET film | Silica vapor deposition PET film | Silica vapor deposition PET film | Silica vapor deposition PET film | Silica vapor deposition PET film | Silica vapor deposition PET film |
| Evaluation | | Reliability during heat sealing | | ○ | △ | ○ | ⊙ | ○ | ○ |
| | | Film formability | | ○ | ○ | ○ | ○ | ○ | ○ |
| | | Appearance: Bubbles | | △ | △ | △ | △ | △ | △ |

[Table 19]

| | | | | Example G19 | Example G20 | Comparative Example G1 | Comparative Example G2 | Comparative Example G3 | Comparative Example G4 | Comparative Example G5 |
|---|---|---|---|---|---|---|---|---|---|---|
| Laminate | Sealant film | Recycled material-containing layer | Material | Recycled material 2 | Recycled material 1 | Recycled material 1 | Recycled material 1 | Recycled material 2 | Recycled material 2 | Recycled material 1 |
| | | | Thickness (μm) | 90 | 80 | 30 | 95 | 80 | 98 | 30 |
| | | Sealant layer | Material | LLDPE | LLDPE | LLDPE | LLDPE | LLDPE | LLDPE | LLDPE |
| | | | Additive | Anti-blocking agent | Anti-blocking agent | - | Anti-blocking agent | - | Anti-blocking agent | Anti-blocking agent |
| | | | Thickness (μm) | 10 | 20 | 70 | 5 | 20 | 2 | 70 |
| | | | Arithmetic average surface roughness Ra (μm) | 2.0 | 2.0 | 0.1 | 5.5 | 0.1 | 5.5 | 0.3 |
| | | | Maximum height H of projection (μm) | 6 | 7 | 0.2 | 12 | 0.2 | 12 | 0.4 |
| | | | Ratio [W/H] | 10 | 10 | 5 | 22 | 5 | 22 | 2 |
| | | Auxiliary layer | Material | - | LLDPE | - | - | - | - | - |
| | | | Thickness (μm) | - | 20 | - | - | - | - | - |
| | Adhesive layer | | Material | Solvent-based adhesive | Solvent-based adhesive | Solvent-based adhesive | Solvent-based adhesive | Solvent-based adhesive | Solvent-free adhesive | Solvent-free adhesive |
| | Base material film | | Material | Silica vapor deposition PET film | Silica vapor deposition PET film | Silica vapor deposition PET film | Silica vapor deposition PET film | Silica vapor deposition PET film | Silica vapor deposition PET film | Silica vapor deposition PET film |
| Evaluation | | Reliability during heat sealing | | ○ | ○ | ⊙ | × | ⊙ | × | ⊙ |
| | Film formability | | | ○ | ○ | × | ○ | × | ○ | ○ |
| | Appearance: Bubbles | | | △ | △ | ⊙ | × | ⊙ | × | ⊙ |

EP 4 714 654 A1

As shown in Tables 16 and 19, it was confirmed that the sealant films and laminates of Examples G1 to G20 contained a recycled material and had sufficient reliability during heat sealing and film formability, and also had excellent appearance. Accordingly, according to the present invention, material recycling of a recycled material containing two or more kinds of resins can be realized in a laminate or a packaging material.

**Reference Signs List**

1a, 1b Sealant film, 2 Recycled material-containing layer, 3 Sealant layer, 4 Auxiliary layer, 5 Adhesive layer, 6 Base material film, 7 Print layer, 10a, 10b, 10c, 10d Laminate, 12 Gas barrier layer, 50 Aggregate, 100, 101, 102 Packaging material

**Claims**

1. A sealant film comprising:

   a recycled material-containing layer containing a recycled material containing two or more kinds of resins; and
   a sealant layer laminated on one main surface of the recycled material-containing layer,
   wherein the arithmetic surface roughness of the surface of the sealant layer opposite to the recycled material-containing layer is 0.5 $\mu$m to 5 $\mu$m.

2. The sealant film according to claim 1, wherein at least one of the recycled material-containing layer and the sealant layer contains a chemically recycled resin.

3. The sealant film according to claim 1, wherein the sealant film contains a polyethylene-based resin derived from biomass.

4. The sealant film according to claim 1, wherein the sealant film is subjected to electron beam irradiation treatment.

5. The sealant film according to claim 1, wherein the sealant film contains inorganic particles.

6. The sealant film according to claim 1, wherein the thickness of the sealant layer is 5 $\mu$m to 70 $\mu$m.

7. The sealant film according to claim 1, wherein the maximum height H of projections on the surface of the sealant layer is 0.5 $\mu$m to 10 $\mu$m, and the projections having the maximum height H have a ratio [W/H] of a width W at half the maximum height H to the maximum height H of 20 or less.

8. The sealant film according to claim 1, wherein a resin having the highest content ratio among the two or more kinds of resins contained in the recycled material is a polyethylene-based resin or a polypropylene-based resin.

9. The sealant film according to claim 1, further comprising: an auxiliary layer laminated on the other main surface of the recycled material-containing layer.

10. The sealant film according to claim 9, wherein the auxiliary layer contains a virgin resin of the same type as the resin having the highest content ratio in the recycled material-containing layer.

11. A laminate comprising:

    the sealant film according to any one of claims 1 to 10; and
    a gas barrier layer provided on the surface of the sealant film opposite to the sealant layer.

12. A laminate further comprising, in this order:

    the sealant film according to any one of claims 1 to 10;
    an adhesive layer; and
    a base material film.

13. A packaging material comprising: the sealant film according to any one of claims 1 to 10.

**14.** The packaging material according to claim 13, wherein the content of plastic material contained in the recycled material is 10 mass% or more based on the total amount of plastic material in the packaging material.

**15.** A packaging bag produced from the packaging material according to claim 13.

**16.** A packaging bag produced from the packaging material according to claim 14.

Fig.1

**Fig.2**

Fig.3

**Fig.4**

Fig.5

Fig.6

**Fig.7**

Fig.8

Fig.9

Fig.10

## INTERNATIONAL SEARCH REPORT

| International application No. |
|---|
| **PCT/JP2024/019562** |

**A. CLASSIFICATION OF SUBJECT MATTER**

***B32B 27/32***(2006.01)i; ***B32B 7/12***(2006.01)i; ***B65D 65/40***(2006.01)i
FI: B32B27/32 E; B32B7/12; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/00-65/46; C08J7/04-7/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2022/069805 A1 (WOODLY OY) 07 April 2022 (2022-04-07) p. 5, line 23 to p. 14, line 4, claims | 1-2, 4-6, 9, 11-16 |
| Y | WO 2018/003978 A1 (TOYO ALUMINIUM KK) 04 January 2018 (2018-01-04) paragraphs [0029]-[0031], table 1 | 1-2, 4-6, 9, 11-16 |
| Y | JP 2019-116025 A (TOPPAN PRINTING CO., LTD.) 18 July 2019 (2019-07-18) paragraphs [0001], [0028] | 1-2, 4-6, 9, 11-16 |
| A | WO 2021/125100 A1 (TOPPAN PRINTING CO., LTD.) 24 June 2021 (2021-06-24) entire text | 1-16 |
| A | JP 2023-10098 A (TOYO SEIKAN KAISHA LTD.) 20 January 2023 (2023-01-20) entire text | 1-16 |
| A | JP 2022-7902 A (DAI NIPPON PRINTING CO., LTD.) 13 January 2022 (2022-01-13) entire text | 1-16 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 July 2024** | **06 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
**Information on patent family members**

International application No.

**PCT/JP2024/019562**

| Patent document cited in search report | | | Publication date (day/month/year) | Patent family member(s) | | | Publication date (day/month/year) |
|---|---|---|---|---|---|---|---|
| WO | 2022/069805 | A1 | 07 April 2022 | JP | 2023-545629 | A | |
| | | | | US | 2024/0017528 | A1 | |
| | | | | EP | 4221954 | A1 | |
| | | | | CN | 116209558 | A | |
| | | | | BR | 112023006105 | A | |
| | | | | KR | 10-2023-0079387 | A | |
| | | | | FI | 20205967 | A1 | |
| WO | 2018/003978 | A1 | 04 January 2018 | (Family: none) | | | |
| JP | 2019-116025 | A | 18 July 2019 | (Family: none) | | | |
| WO | 2021/125100 | A1 | 24 June 2021 | JP | 2023-7518 | A | |
| JP | 2023-10098 | A | 20 January 2023 | (Family: none) | | | |
| JP | 2022-7902 | A | 13 January 2022 | WO | 2021/100770 | A1 | |
| | | | | EP | 4063116 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022124229 A

**Non-patent literature cited in the description**

- The Japan Society of Polymer Processing, Plastic Materials in Polymer Processing. Morikita Publishing Co., Ltd., 2011, vol. 335